(19) Europäisches Patentamt
European Patent Office
Office européen des brevets

(11) **EP 2 541 030 B1**

(12) **EUROPEAN PATENT SPECIFICATION**

(45) Date of publication and mention
of the grant of the patent:
**24.04.2019 Bulletin 2019/17**

(21) Application number: **11858468.9**

(22) Date of filing: **18.03.2011**

(51) Int Cl.:
*F02D 45/00* *(2006.01)*     *F02D 41/02* *(2006.01)*
*F02D 21/04* *(2006.01)*     *F02D 35/02* *(2006.01)*
*F02D 41/40* *(2006.01)*     *F02D 41/38* *(2006.01)*

(86) International application number:
**PCT/JP2011/056583**

(87) International publication number:
**WO 2012/127569 (27.09.2012 Gazette 2012/39)**

(54) **CONTROL DEVICE FOR INTERNAL COMBUSTION ENGINE**

STEUERGERÄT EINES VERBRENNUNGSMOTORS

DISPOSITIF DE COMMANDE POUR MOTEUR A COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.01.2013 Bulletin 2013/01**

(73) Proprietor: **TOYOTA JIDOSHA KABUSHIKI
KAISHA**
**Toyota-shi, Aichi-ken, 471-8571 (JP)**

(72) Inventor: **NADA, Mitsuhiro**
**Toyota-shi, Aichi-ken, 471-8571 (JP)**

(74) Representative: **TBK**
**Bavariaring 4-6**
**80336 München (DE)**

(56) References cited:
**WO-A1-2010/064302        JP-A- 2002 267 159**
**JP-A- 2004 100 567        JP-A- 2007 248 119**
**JP-A- 2008 169 717        JP-A- 2010 112 225**
**US-A1- 2005 229 903        US-A1- 2009 012 673**
**US-A1- 2009 292 447        US-A1- 2010 299 051**

• **John B. Heywood: "Internal Combustion Engine
Fundamentals" In: "INTERNAL COMBUSTION
ENGINE FUNDAMENTALS.", 1 January 1988
(1988-01-01), NEW YORK, MCGRAW-HILL., US
022039, XP055218687, ISBN: 978-0-07-100499-2
pages 504-507, * page 506 ***

**Description**

Technical Field

The present invention relates to a control apparatus of a compression self-igniting internal combustion engine typified by a diesel engine. In particular, the present invention relates to measures to achieve a betterment of a method of determining the presence of deterioration of combustion state in combustion chambers and an improvement of the combustion state when the combustion state deteriorates.

Background Art

Conventionally, in diesel engines used as automobile engines or the like (hereinafter also referred to simply as "engine" in some cases), it has been proposed to carry out the evaluation of combustion state in order to determine whether the stability of combustion, generated torque, a fuel consumption rate, and the like are appropriately obtained (see documents JP 2006-183466 A and JP H11-173201 A).

Specifically, as the evaluation method of the combustion state, the combustion state in the combustion chamber is evaluated such that a heat production rate waveform that is the variation of a heat production rate in the combustion chamber (amount of heat generated per rotation angle unit of a crankshaft) and a fuel injection rate waveform that is the variation of a fuel injection rate (fuel injection amount per rotation angle unit of the crankshaft) have been used, and it is determined whether these waveforms correspond with an ideal waveform.

For example, document JP 2006-183466 A discloses that a heat production rate accompanied with the combustion in the combustion chamber is calculated based on an output signal of an in-cylinder pressure sensor, and a peak value of the heat production rate is obtained by utilizing the heat production rate waveform indicating the variation of the heat production rate to evaluate the combustion state. Also, document JP H11-173201 A discloses that an ignition time of fuel, a peak value of the heat production rate, and an integral value of the heat production rate (cumulative absolute amount as to the amount of heat generated) based on a heat production rate obtained by a pressure in the combustion chamber are obtained to evaluate the combustion state. Then, when it is determined that the combustion state is deteriorated, a fuel injection mode is corrected to achieve the improvement of the combustion state.

US 2009/012673 A1 and US 2009/292447 A1 both disclose a control apparatus which performs a combustion diagnostic based on heat production analysis.

Summary of the Invention

Problems to be Solved by the Invention

Thus, the combustion state in the combustion chamber is successively monitored with the heat production rate waveform and the like, that is, the amount of heat generated in the combustion chamber (absolute amount of heat generated in the combustion chamber) is successively monitored so as to evaluate the combustion state. That is, the heat production rate waveform is produced, and the combustion state is evaluated by the comparison of the heat production rate waveform with an ideal heat production rate waveform produced in advance (pattern matching). Thus, great man-hours are needed in evaluating the combustion state.

Also, in order to determine whether the combustion state is deteriorated by the comparison of the ideal heat production rate waveform with an actual heat production rate waveform, it is necessary to define a determination reference in advance, which serves as a reference to determine that the combustion state deteriorates based on a degree of difference between the ideal heat production rate waveform and the actual heat production rate waveform. However, in the comparison between the waveforms, it is difficult to set the determination reference, and it is necessary to analyse various combustion patterns to set the determination reference. Thus, the great man-hours are also needed to produce the determination reference.

Further, it is necessary to individually define the determination reference of the combustion state for each engine type and each fuel injection amount. In other words, it is necessary to individually set the ideal heat production rate waveform for each engine type and each fuel injection amount and define the determination reference, which serves as a reference to determine that the combustion state is deteriorated based on a degree of difference between the ideal heat production rate waveform and the actual heat production rate waveform, for each engine type and each fuel injection amount. Thus, the comprehensive evaluation reference of the combustion state common to various engine types and various fuel injection amounts has not yet been established, and the proposition of the comprehensive evaluation reference of the combustion state (quantified indicator to evaluate the combustion state) has been requested. That is, the quantification of the reference value to evaluate the combustion state has been requested.

The present invention has been achieved in view of the above circumstances to solve the technical problems, and it is the object of the present invention to provide a control apparatus of an internal combustion engine that can readily evaluate the combustion state in a compression self-igniting internal combustion engine and achieve an improvement of the combustion state when it is determined that the combustion state deteriorates, based on the evaluation. The object of the invention is achieved by a control apparatus according to claim 1. Advantageous embodiments are carried out according to the dependent claims.

According to the invention, a maximum value of an amount of heat generated per volume unit of fuel in an inspection target period (hereinafter also referred to as "reference heat production efficiency" in some cases) in the case where ideal combustion is carried out in a combustion chamber and an amount of heat generated per volume unit of fuel (hereinafter referred to as "actual heat production efficiency" in some cases) in the case where the fuel is actually combusted in the combustion chamber in the inspection target period are compared. When the actual heat production efficiency is lower than the reference heat production efficiency, and its deviation amount is equal to or more than a predetermined amount, it is determined that combustion state is deteriorated, and correction operation of increase correction for the fuel injection amount or the like is carried out. In contrast, when the actual heat production efficiency is higher than the reference heat production efficiency, it is determined that the fuel amount actually injected in response to a fuel injection amount instruction value is excessive, and decrease correction for the fuel injection amount is carried out.


-Solution Means-

Specifically, the present invention presupposes that a control apparatus of a compression self-igniting internal combustion engine is configured to carry out combustion by self-ignition of fuel injected from a fuel injection valve into a combustion chamber in accordance with a fuel injection amount instruction value. The control apparatus of the internal combustion engine includes a combustion deterioration determining means configured to compare a reference heat production efficiency that is a uniform value and a maximum value of an amount of heat generated per volume unit of fuel in a predetermined inspection target period including at least part of combustion period of the fuel injected with an actual heat production efficiency that is a value obtained by dividing an amount of heat actually generated in the inspection target period by a fuel injection amount instructed by the fuel injection amount instruction value, and configured to determine whether there is an occurrence of combustion deterioration in the combustion chamber based on a deviation amount of the actual heat production efficiency with respect to the reference heat production efficiency.

Incidentally, "a predetermined inspection target period including at least part of combustion period of the fuel injected" is based on concept that includes, for example, a case where the entire period from combustion start to combustion finish of the fuel injected when one-time fuel injection is executed is set as the inspection target period, and a case where part of the period from the combustion start to the combustion finish of the fuel is set as the inspection target period. In this case, the reference heat production efficiency of the case where part of the period from the combustion start to the combustion finish of the fuel injected is set as the inspection target period is set lower than the reference heat production efficiency of the case where the entire period from the combustion start to the combustion finish of the fuel injected is set as the inspection target period.

When the ideal combustion is carried out in the combustion chamber, the amount of heat generated per volume unit of fuel in the inspection target period is the maximum value (reference heat production efficiency), and the maximum value is invariable if the fuel amount combusted in the inspection target period is constant even if the fuel injection amount and the fuel injection timing vary. Accordingly, the occurrence of the deterioration in the combustion state in the combustion chamber can be determined by judging how much the actual heat production efficiency obtained by the amount of heat generated per volume unit of the fuel of actual combustion in the inspection target period (a value that is obtained by dividing an amount of heat actually generated in the inspection target period by a fuel injection amount instructed by the fuel injection amount instruction value) is deviated from the reference heat production efficiency. This determination method makes it unnecessary to individually define the evaluation reference of the combustion state for each type of internal combustion engines and each fuel injection amount and makes it possible to establish a comprehensive evaluation reference of the combustion state common to various types of internal combustion engines and each fuel injection amount. Therefore, this facilitates the quantification of the evaluation reference of the combustion state and achieves the simplification of the evaluation operations.

Also, it can be determined whether there is an occurrence of the deterioration in the combustion state in the combustion chamber by comparing the actual heat production efficiency with the reference heat production efficiency (comparing numerical values). Thus, it is possible to evaluate the combustion state with a relatively simple mathematical operation and make it easy to set the determination reference to determine whether there is an occurrence of the deterioration in the combustion state, compared with a conventional evaluation of the combustion state based on the comparison of heat production rate waveforms (pattern matching).

Also, the inspection target period may be set as the entire period of the combustion period or may be set as a partial period of the combustion period.

When the inspection target period is set as the entire period of the combustion period, the reference heat production efficiency is set as a uniform value and a maximum value of the amount of heat generated per volume unit of the fuel in the entire period of the combustion period. In contrast, the actual heat production efficiency is set as a value that is obtained by dividing an amount of heat actually generated in the entire period of the combustion period by a fuel injection amount instructed by the fuel injection amount instruction value.

On the other hand, when the inspection target period is set as a partial period of the combustion period, whereas the reference heat production efficiency is a uniform value defined as a value that is obtained by multiplying a maximum value of the amount of heat generated per volume unit of fuel in the entire period of the combustion period by a predetermined ratio, the actual heat production efficiency is set as a value that is obtained by dividing an amount of heat actually generated in the entire period of the combustion period by the fuel injection amount instructed by the fuel injection amount instruction value.

Thus, when the inspection target period is set as the partial period of the combustion period, the actual heat production efficiency is calculated, with the partial period of the combustion period targeted, so that the simplification of mathematical operation can be achieved. Also, when the inspection target period is set as a relatively early period of the combustion period, the acquisition time of the actual heat production efficiency can be obtained in an early time, which makes it possible to determine whether there is an occurrence of the deterioration in the combustion state in the combustion chamber early.

A configuration to improve the combustion state in the case where it is determined that the combustion state is deteriorated in the combustion chamber may include the followings.

A correction means is provided that is configured to carry out correction for a fuel injection mode when the deviation amount of the actual heat production efficiency with respect to the reference heat production efficiency exceeds a predetermined threshold value, and the combustion deterioration determining means determines that the combustion state in the combustion chamber is deteriorated.

As a concrete configuration of the correction means, the correction means is configured to carry out increase correction for the fuel injection amount when the actual heat production efficiency is lower than the reference heat production efficiency, its deviation amount exceeds a predetermined threshold value, and the combustion deterioration determining means determines that the combustion state in the combustion chamber deteriorates.

Also, the correction means is configured to carry out decrease correction for the fuel injection amount and carry out increase correction for an amount of oxygen introduced to the combustion chamber when the deterioration of the combustion state is not improved by the increase correction for the fuel injection amount.

Meanwhile, the correction means may be configured to carry out decrease correction for the fuel injection amount when the actual heat production efficiency is higher than the reference heat production efficiency.

When the actual heat production efficiency is lower than the reference heat production efficiency, and its deviation amount exceeds a predetermined threshold value, there is a possibility that the situation is caused by the deterioration of temperature conditions in the combustion chamber (nonattainment of the temperature in the combustion chamber, and the like). Accordingly, in this case, the increase correction for the fuel injection amount is carried out so as to improve the combustion state. When the combustion state is not improved by the increase correction for the fuel injection amount, that is, when the actual heat production efficiency is lower than the reference heat production efficiency, there is a high possibility that the situation is caused by the deterioration of gas conditions (lack of the amount of oxygen) in the combustion chamber. Therefore, in this case, the correction means may be configured to carry out decrease correction for the increased fuel injection amount and carry out increase correction for an amount of oxygen introduced to the combustion chamber. This improves the environmental conditions in the combustion chamber (solve the lack of the amount of oxygen) and achieves the improvement of the combustion state.

Meanwhile, when the actual heat production efficiency is higher than the reference heat production efficiency, it is determined that the fuel amount actually injected is higher than the fuel injection amount instructed by the fuel injection amount instruction value, and thus the decrease correction for the fuel injection amount is carried out. That is, when the fuel amount actually injected according to the fuel injection amount instruction value is insufficient, the actual heat production efficiency is lower than the reference heat production efficiency. Also, when the environmental condition in the combustion chamber is deteriorated even when an appropriate amount of fuel corresponding to the fuel injection amount instruction value is injected, the actual heat production efficiency is lower than the reference heat production efficiency. That is, when the actual heat production efficiency is higher than the reference heat production efficiency, there is the possibility that the fuel amount actually injected is higher than the fuel injection amount instruction value. Accordingly, the correction means may be configured to carry out the decrease correction for the fuel injection amount to bring the fuel injection amount closer to the appropriate amount in this case.

As the inspection target period, various periods can be set.

When at least main injection (second injection) and auxiliary injection (first injection) to be executed prior to the main injection are executed, as the fuel injection from the fuel injection valve into the combustion chamber, the inspection target period may be set as a period from a combustion start time of fuel injected in the auxiliary injection to a combustion finish time of fuel injected in the main injection, or a period that is part of the period.

When the injection is thus carried out plural times, if the ideal combustion is carried out in the combustion chamber, the amount of heat generated per volume unit of the fuel in the period from the combustion start time of the fuel injected in the auxiliary injection to the combustion finish time of the fuel injected in the main injection, or a period that is part of the period is at the maximum value, and this maximum value is invariable even if the fuel injection amount and the fuel injection timing vary. Consequently, in this case, the occurrence of the deterioration in the combustion state in the combustion chamber can be determined by judging how much the actual heat production efficiency is deviated from the reference heat production efficiency.

Also, when at least main injection and auxiliary injection to be executed prior to the main injection are executed, as a fuel injection from the fuel injection valve into the combustion chamber, and in a case where there is produced an amount of heat generated by combustion of fuel injected in the main injection after an amount of heat generated by combustion of fuel injected in the auxiliary injection reduces to "0", the inspection target period may be set as a period from a combustion start time of the fuel injected in the auxiliary injection to a time when the amount of heat generated by the combustion of the fuel injected in the auxiliary injection reduces to "0", or a period that is part of the period.

Also, it may be configured such that when at least main injection and auxiliary injection to be executed prior to the main injection are executed, as a fuel injection from the fuel injection valve into the combustion chamber, in a case where there is produced an amount of heat generated by combustion of fuel injected in the main injection after an amount of heat generated by combustion of fuel injected in the auxiliary injection reduces to "0", the inspection target period may be set as a period from a combustion start time of the fuel injected in the main injection to a time when the amount of heat generated by the combustion of the fuel injected in the main injection reduces to "0", or a period that is part of the period.

When the injection is thus carried out plural times, and when there is produced an amount of heat generated by combustion of the fuel injected in the main injection after the amount of heat generated by combustion of the fuel injected in the auxiliary injection once reduces to "0", each combustion state can individually be evaluated. That is, the evaluation of preheating amount by the combustion of the fuel injected in the auxiliary injection and the evaluation of generated torque by the combustion of the fuel injected in the main injection can be carried out in the same combustion stroke.

Effects of the Invention

According to the aspect of the present invention, it is determined whether there is an occurrence of the deterioration in the combustion state in the combustion chamber by comparing "reference value" defined by the maximum value of the amount of heat generated per volume unit of the fuel to be targeted in the inspection target period with "actual value" obtained by a value that is obtained by dividing an amount of heat actually generated in the combustion period by a fuel injection amount instructed by the fuel injection amount instruction value. Thus the evaluation reference needs not to be individually defined for each type of internal combustion engines and each fuel injection amount and a comprehensive evaluation reference of the combustion state common to various types of internal combustion engines and fuel injection amounts can be established. Also, it is possible to evaluate the combustion state with a relatively simple mathematical operation, compared with the evaluation of the combustion state based on the comparison of heat production rate waveforms (pattern matching).

Brief Description of the Drawings

FIG. 1 is a schematic configuration view of an engine and a control system according to the present embodiment.
FIG. 2 is a cross-sectional view of a combustion chamber of a diesel engine and its peripherals.
FIG. 3 is a block diagram illustrating a configuration of a control system such as an ECU.
FIG. 4 is waveform diagrams illustrating variations of a heat production rate (amount of heat generated per rotation angle unit of a crankshaft) and a fuel injection rate (fuel injection amount per rotation angle unit of the crankshaft) during combustion stroke respectively.
FIG. 5 is diagrams illustrating one example of a heat production rate waveform and a fuel injection rate waveform to explain an evaluation method of combustion state.
FIGs. 6 are diagrams illustrating experimental results of a case where combustion is carried out in the combustion chamber based on various fuel injection amounts. FIG. 6A is a diagram illustrating a heat production rate waveform and a fuel injection rate waveform for each fuel injection pressure, and FIG. 6B is a diagram illustrating a relation between a fuel injection amount and a heat production efficiency (amount of heat generated per volume unit of fuel).
FIGs. 7 are diagrams illustrating experimental results of a case where combustion is carried out in the combustion chamber based on various fuel injection pressure. FIG. 7A is a diagram illustrating a heat production rate waveform and a fuel injection rate waveform for each fuel injection pressure, and FIG. 7B is a diagram illustrating a relation between the fuel injection pressure and the heat production efficiency.

FIGs. 8 are diagrams illustrating experimental results of a case where combustion is carried out in the combustion chamber based on various fuel injection timings. FIG. 8A is a diagram illustrating a heat production rate waveform and a fuel injection rate waveform for each fuel injection timing, and FIG. 8B is a diagram illustrating a relation between the fuel injection timing and the heat production efficiency.

FIGs. 9 are diagrams illustrating experimental results of a case where combustion is carried out in the combustion chamber based on various oxygen excess ratios. FIG. 9A is a diagram illustrating a heat production rate waveform and a fuel injection rate waveform for each oxygen excess ratio, and FIG. 9B is a diagram illustrating a relation between the oxygen excess ratio and the heat production efficiency.

FIG. 10 is a flowchart illustrating procedures for improvement operation of the combustion state in accordance with evaluation of the combustion state.

FIG. 11 is diagrams illustrating one example of the heat production rate waveform and the fuel injection rate waveform to explain an evaluation method of the combustion state in an inspection target period according to a first modification.

FIG. 12 is diagrams illustrating one example of the heat production rate waveform and the fuel injection rate waveform to explain an evaluation method of the combustion state in an inspection target period according to a second modification.

FIG. 13 is diagrams illustrating one example of the heat production rate waveform and the fuel injection rate waveform to explain an evaluation method of the combustion state in an inspection target period according to a third modification.

FIG. 14 is diagrams illustrating one example of the heat production rate waveform and the fuel injection rate waveform to explain an evaluation method of the combustion state in an inspection target period according to a fourth modification.

FIG. 15 is diagrams illustrating one example of the heat production rate waveform and the fuel injection rate waveform to explain an evaluation method of the combustion state in an inspection target period according to a fifth modification.

FIG. 16 is diagrams illustrating one example of the heat production rate waveform and the fuel injection rate waveform to explain an evaluation method of the combustion state in an inspection target period according to a sixth modification.

Modes for Carrying out the Invention

Hereinafter, embodiments of the present invention will be described below referring to the drawings. In the present embodiment, description will be given with regard to a case where the present invention is applied to a common rail in-cylinder direct injection multi-cylinder (for example, inline four-cylinder) diesel engine (compression self-igniting internal combustion engine) mounted in an automobile.

-Engine Configuration-

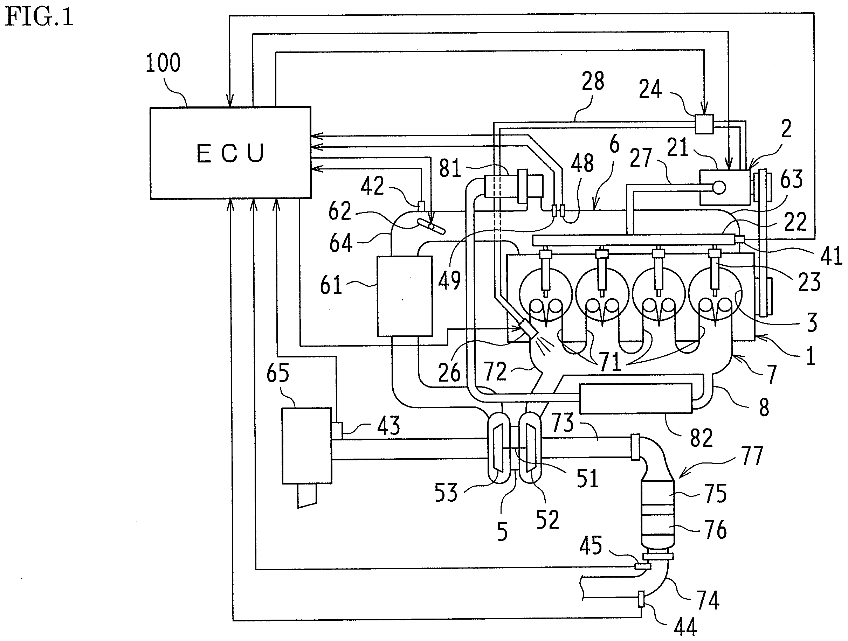

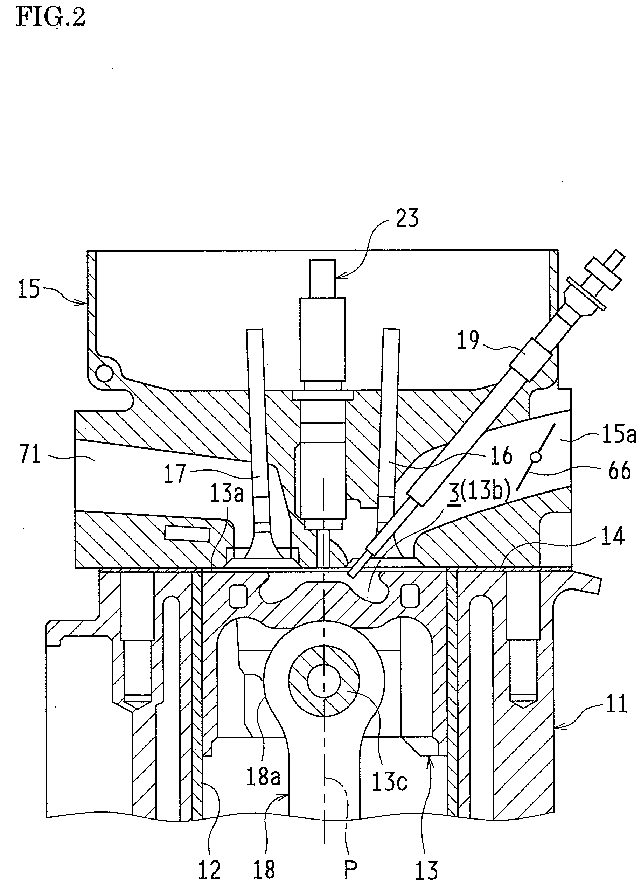

First, schematic configuration of a diesel engine (hereinafter referred to simply as an engine) according to the present embodiment will be described. FIG. 1 is a schematic configuration view of an engine 1 and a control system according to the present embodiment. Also, FIG. 2 is a cross-sectional view of a combustion chamber 3 of the diesel engine and its peripherals.

As shown in FIG. 1, the engine 1 according to the present embodiment is configured as a diesel engine system including, as main units, a fuel supply system 2, the combustion chambers 3, an intake system 6, an exhaust system 7, and the like.

The fuel supply system 2 includes a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting this drawn fuel under high pressure, supplies that fuel to the common rail 22 via the engine fuel path 27. The common rail 22 has a function as an accumulation chamber where high pressure fuel supplied from the supply pump 21 is held (accumulated) at a predetermined pressure, and distributes this accumulated fuel to each injector 23. The injectors 23 are configured as piezo injectors within which a piezoelectric element (piezo element) is disposed and which supply fuel by injection into the combustion chambers 3 by appropriately opening a valve. The details of control of fuel injection from the injectors 23 will be described later.

Also, the supply pump 21 supplies part of the fuel drawn from the fuel tank to the fuel addition valve 26 via the added fuel path 28. In the added fuel path 28, the above-described cutoff valve 24 is disposed in order to stop fuel addition by cutting off the added fuel path 28 during an emergency.

Also, the fuel addition valve 26 is configured as an electronically controlled opening/closing valve whose valve opening time is controlled with an addition control operation by an ECU 100 such that the amount of fuel added to the exhaust system 7 is a target addition amount (an addition amount such that the exhaust A/F equals the target A/F), and such that a fuel addition timing is a predetermined timing. That is, a desired amount of fuel from the fuel addition valve 26 is supplied by injection to the exhaust system 7 (to an exhaust manifold 72 from exhaust ports 71) at an appropriate timing.

The intake system 6 includes an intake manifold 63 connected to an intake port 15a formed in a cylinder head 15 (see FIG. 2), and an intake tube 64 constituting an intake path is connected to this intake manifold 63. Also, in this intake path, an air cleaner 65, an airflow meter 43, and a throttle valve (an intake throttle valve) 62 are disposed in this order from the upstream side. The airflow meter 43 outputs an electrical signal corresponding to the amount of air that flows into the intake path via the air cleaner 65.

Also, the intake system 6 includes a swirl control valve (swirl velocity variable mechanism) 66 to change a swirl flow (swirl flow in the horizontal direction) in the combustion chamber 3 (see FIG. 2). Specifically, each cylinder includes two systems, which provide a normal port and a swirl port, as the intake port 15a. In the normal port 15a shown in FIG. 2, a swirl control valve 66 made up of a butterfly valve whose opening degree is adjustable is disposed. An actuator, not shown, is linked with the swirl control valve 66. It is configured such that the amount of air flow that flows through the normal port 15a can be changed in accordance with the opening degree of the swirl control valve 66, which is drivingly adjusted by the actuator. The higher opening degree of the swirl control valve 66 leads to the larger amount of air drawn from the normal port 15a into the cylinder. Accordingly, a swirl generated in the swirl port (not shown in FIG. 2) is relatively weaken, which leads to a low swirl (a state where a swirl velocity is low). Conversely, the lower opening degree of the swirl control valve 66 leads to the smaller amount of air drawn from the normal port 15a into the cylinder. Consequently, the swirl generated in the swirl port is relatively enhanced, which leads to a high swirl (a state where the swirl velocity is high) in the cylinder.

The exhaust system 7 includes the exhaust manifold 72 connected to the exhaust ports 71 formed in the cylinder head 15, and exhaust tubes 73 and 74 constituting an exhaust path are connected to this exhaust manifold 72. Also, in this exhaust path, a maniverter (exhaust purification apparatus) 77 is disposed that includes a NOx storage catalyst (NSR catalyst: NOx Storage Reduction catalyst) 75 and a DPNR catalyst (Diesel Particulate-NOx Reduction catalyst) 76. These NSR catalyst 75 and DPNR catalyst 76 will be described below.

The NSR catalyst 75 is a storage reduction NOx catalyst and includes, for example, alumina ($Al_2O_3$) as a support that supports thereon, for example, an alkali metal such as potassium (K), sodium (Na), lithium (Li), and cesium (Cs); an alkaline earth element such as barium (Ba) and calcium (Ca); a rare earth element such as lanthanum (La) and Yttrium (Y); and a precious metal such as platinum (Pt).

The NSR catalyst 75 stores NOx in a state in which a large amount of oxygen is present in the exhaust, while reducing NOx to $NO_2$ or NO to release NOx in a state in which the oxygen concentration in the exhaust is low and a large amount of a reduction component (for example, an unburned component (HC) of fuel) is present. NOx released as $NO_2$ or NO is further reduced to $N_2$ due to quick reaction with HC or CO in the exhaust. Also, by reducing $NO_2$ or NO, HC and CO themselves are oxidized and thus become $H_2O$ or $CO_2$. That is, by appropriately adjusting the oxygen concentration or the HC component in the exhaust introduced to the NSR catalyst 75, HC, CO, and NOx in the exhaust can be purified. In the configuration of the present embodiment, the oxygen concentration and the HC component in the exhaust can be adjusted with the operation of adding fuel from the fuel addition valve 26.

Meanwhile, the DPNR catalyst 76 includes, for example, a porous ceramic structure that supports a NOx storage reduction catalyst, so that PM in exhaust gas is captured when passing through a porous wall. When the air-fuel ratio of the exhaust gas is lean, NOx in the exhaust gas is stored in the NOx storage reduction catalyst, while when the air-fuel ratio is rich, the stored NOx is reduced and released. Furthermore, the DPNR catalyst 76 supports a catalyst that oxidizes/burns the captured PM (for example, an oxidization catalyst whose main component is a precious metal such as platinum).

Now, the configuration of the combustion chamber 3 of the diesel engine and peripheral parts of the combustion chamber 3 will be described with reference to FIG. 2. As shown in FIG. 2, in a cylinder block 11 constituting part of the main body of the engine, a cylindrical cylinder bore 12 is formed in each the cylinders (four cylinders), and each cylinder bore 12 vertically slidably accommodates a piston 13.

The combustion chamber 3 is formed on the top side of a top face 13a of the piston 13. That is, the combustion chamber 3 is defined by a lower face of the cylinder head 15 installed on top of the cylinder block 11 via a gasket 14, an inner wall face of the cylinder bore 12, and the top face 13a of the piston 13. In approximately the center of the top face 13a of the piston 13, a cavity (a recessed unit) 13b is disposed in the form of a depression, and the cavity 13b also constitutes part of the combustion chamber 3.

The shape of the cavity 13b is such that the size of depression at the center portion (on a cylinder center line P) is small and gradually increases toward the outer peripheral side. That is, as shown in FIG. 2, when the piston 13 is adjacent to its compression top dead center, the combustion chamber 3 defined by the cavity 13b has a small portion of space of relatively small capacity at the center portion, and a gradually expanded portion of space (which is assumed an expanded space) toward the outer peripheral side.

A small end 18a of a connecting rod 18 is linked to the piston 13 via a piston pin 13c, while a large end of the connecting rod 18 is linked to a crankshaft serving as an engine output shaft. This ensures that the reciprocating movement of the piston 13 within the cylinder bore 12 is transmitted to the crankshaft via the connecting rod 18, which causes the crankshaft to rotate to obtain engine output. Also, a glow plug 19 is disposed facing the combustion chamber 3. The glow plug 19 functions as a starting assistance apparatus that glows by receiving a flow of electrical current immediately before the engine 1 is started, and that receives a blow of part of a fuel spray, thus promoting ignition and combustion.

The cylinder head 15 includes the intake port 15a formed to introduce air to the combustion chamber 3, the exhaust port 71 formed to discharge exhaust gas from the combustion chamber 3, an intake valve 16 disposed to open/close the intake port 15a, and an exhaust valve 17 disposed to open/close the exhaust port 71. The intake valve 16 and the exhaust valve 17 are disposed to face one another across the cylinder center line P. That is, the engine 1 of this example is configured as a cross flow-type engine. Also, the injector 23, which injects fuel directly into the combustion chamber 3, is mounted in the cylinder head 15. The injector 23 is disposed in approximately the center above the combustion chamber 3 in upright orientation along the cylinder center line P, and injects fuel introduced from the common rail 22 toward the combustion chamber 3 at a predetermined timing.

Furthermore, as shown in FIG. 1, a turbocharger 5 is disposed in the engine 1. The turbocharger 5 includes a turbine wheel 52 and a compressor impeller 53 that are linked to one another via a turbine shaft 51. The compressor impeller 53 is disposed facing the inside of the intake tube 64, while the turbine wheel 52 is disposed facing the inside of the exhaust tube 73. This ensures that the turbocharger 5 utilizes exhaust flow (exhaust pressure) received by the turbine wheel 52 to rotate the compressor impeller 53, so as to implement what is called a turbocharging operation such as increasing the intake pressure. The turbocharger 5 of the present embodiment is a variable nozzle-type turbocharger, in which a variable nozzle vane mechanism (not shown) is provided on the turbine wheel 52 side. Adjusting the opening degree of the variable nozzle vane mechanism ensures adjustment of the turbocharging pressure of the engine 1.

The intake tube 64 of the intake system 6 includes an intercooler 61 that forcibly cools intake air heated by supercharging with the turbocharger 5.

The throttle valve 62 is disposed further downstream than the intercooler 61. The throttle valve 62 is an electronically controlled opening/closing valve whose opening degree is capable of stepless adjustment, and has a function to constrict the area of the path of intake air under predetermined conditions, and thus to adjust (reduce) the supplied amount of intake air.

Also, the engine 1 includes an exhaust gas recirculation path (EGR path) 8 that connects the intake system 6 and the exhaust system 7. The EGR path 8 appropriately recirculates part of the exhaust to the intake system 6 and resupplies the part of the exhaust to the combustion chamber 3, so as to decrease the combustion temperature. Thus, the amount of produced NOx is reduced. Also, the EGR path 8 includes an EGR valve 81 that is opened/closed steplessly under electronic control and is capable of freely adjusting the amount of exhaust flow that flows through the EGR path 8, and an EGR cooler 82 that cools exhaust passing through (recirculates through) the EGR path 8. The EGR path 8, the EGR valve 81, the EGR cooler 82, and the like constitute an EGR apparatus (exhaust gas recirculation apparatus).

-Sensors-

Various sensors are mounted on the parts of the engine 1 to output signals related to environmental conditions at each part and the operating state of the engine 1.

For example, the airflow meter 43 outputs a detection signal according to an intake air flow amount (intake air amount) on the upstream of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that continuously changes according to the oxygen concentration in exhaust on the downstream of the maniverter 77 of the exhaust system 7. An exhaust temperature sensor 45 outputs a detection signal according to the temperature of exhaust gas (exhaust temperature) likewise on the downstream of the maniverter 77 of the exhaust system 7. A rail pressure sensor 41 outputs a detection signal according to the pressure of fuel accumulated in the common rail 22. A throttle opening degree sensor 42 detects the opening degree of the throttle valve 62.

-ECU-

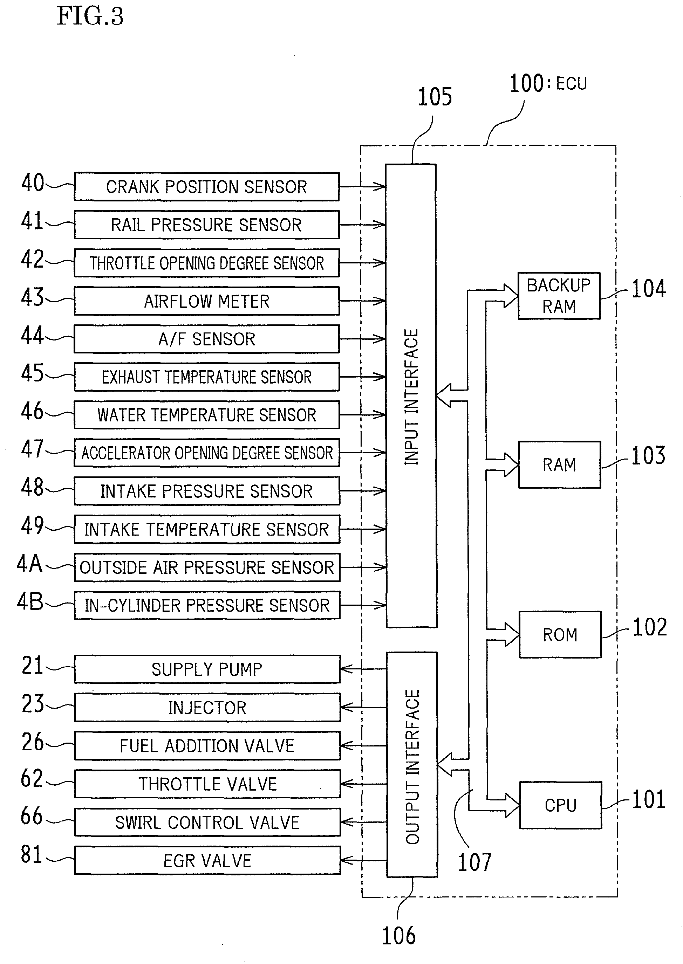

As shown in FIG. 3, the ECU 100 includes a CPU 101, a ROM 102, a RAM 103, and a backup RAM 104. The ROM 102 stores various control programs, maps that are referred to when executing those various control programs, and the like. The CPU 101 executes various arithmetic processes based on the various control programs and maps stored in the ROM 102. The RAM 103 is a memory that temporarily stores results of arithmetic operations with the CPU 101 or data input from the sensors, and the like. The backup RAM 104, for example, is a nonvolatile memory that stores data that needs storing or the like when the engine 1 is stopped.

The CPU 101, the ROM 102, the RAM 103, and the backup RAM 104 above are connected to each other via a bus 107, and are connected to an input interface 105 and an output interface 106.

The rail pressure sensor 41, the throttle opening degree sensor 42, the airflow meter 43, the A/F sensor 44, the exhaust temperature sensor 45, the intake pressure sensor 48, and the intake temperature sensor 49 are connected to the input interface 105. Further connected to the input interface 105 are a water temperature sensor 46 that outputs a detection signal according to the coolant temperature of the engine 1, an accelerator opening degree sensor 47 that outputs a detection signal according to the amount of depressing of an accelerator pedal, a crank position sensor 40 that outputs a detection signal (pulse) at each rotation of an output shaft (crankshaft) of the engine 1 by a predetermined angle, an outside air pressure sensor 4A to detect outside air pressure, an in-cylinder pressure sensor 4B to detect in-cylinder pressure, and the like.

Meanwhile, the supply pump 21, the injector 23, the fuel addition valve 26, the throttle valve 62, the swirl control valve 66, the EGR valve 81, and the like are connected to the output interface 106. Also, in addition, an actuator (not shown) provided for the variable nozzle vane mechanism of the turbocharger 5 is connected to the output interface 106.

Then, the ECU 100 executes various kinds of control of the engine 1 based on the output of the various sensors described above, mathematical values obtained by a mathematical formula in which the values of the output are used, and the various maps stored in the ROM 102.

For example, as the control of fuel injection of the injector 23, the ECU 100 executes pilot injection (auxiliary injection) and main injection.

The pilot injection is an operation that pre-injects a small amount of fuel prior to the main injection from the injector 23. Also, the pilot injection is an injection operation for suppressing an ignition delay of fuel in the main injection, thus leading to stable diffusion combustion, which is also referred to as auxiliary injection. Also, the pilot injection according to the present embodiment not only serves as the function of suppressing an initial combustion speed in the main injection described above, but also serves as a function of performing preheating to raise the temperature inside the cylinder. That is, after execution of the pilot injection, fuel injection is temporarily interrupted, and the temperature of compressed gas (temperature in the cylinder) is adequately increased to reach the fuel self-ignition temperature (for example, 1000K) before the main injection is started. This ensures satisfactory ignition of fuel injected in the main injection.

The main injection is an injection operation for generating torque of the engine 1 (torque-generating fuel supply operation). The amount of injection in the main injection is basically determined according to the operating state, such as engine revolution, amount of accelerator operation, coolant temperature, and intake air temperature, so as to obtain a required torque. For example, a higher torque required value of the engine 1 is obtained as the engine revolution (engine revolution calculated based on an output signal of the crank position sensor 40) increases, and as the accelerator operation amount (amount of depressing of accelerator pedal detected by the accelerator opening degree sensor 47) increases (as the accelerator opening degree increases). Accompanied with that, a large fuel injection amount is set in the main injection. Also, when the interior of the cylinder is adequately preheated by the pilot injection, the fuel injected in the main injection is immediately exposed to the temperature environment of equal to or higher than a self-ignition temperature, and thus thermolysis progresses, and after the injection, the combustion immediately starts.

Specifically, an ignition delay of fuel with respect to the diesel engine is caused by a physical ignition delay and a chemical ignition delay. The physical ignition delay is a time required for the evaporation and mixture of fuel droplets, which depends on the gas temperature of combustion field. In contrast, the chemical ignition delay is a time required for chemical combination and decomposition and oxidation heat generation of fuel vapor. Then, when the interior of the cylinder is adequately preheated as described above, the physical ignition delay can be kept to the minimum. As the result, the ignition delay can be kept to the minimum. Accordingly, as to the combustion form of the fuel injected by the main injection, the premixed combustion is hardly involved, but the diffusion combustion is largely involved. As a result, the control of injection timing in the main injection approximately becomes equal to the control of a start timing of the diffusion combustion, so that the controllability of combustion can greatly be improved. That is, a ratio of the premixed combustion of fuel injected by the main injection is kept to the minimum, so that the controllability of combustion can greatly be improved by the control of an ignition time and a heat production amount based on the control of the fuel injection timing and the fuel injection amount of the main injection.

It is noted that, in addition to the pilot injection and main injection described above, after-injection or post-injection is executed as needed. The after-injection is an injection operation for increasing the exhaust gas temperature. Specifically, the after-injection is executed at a timing such that the combustion energy of fuel supplied is not converted to the torque of the engine 1, but rather, the great majority of the combustion energy is obtained as exhaust heat energy. The post-injection is an injection operation for achieving an increase in temperature of the maniverter 77 by directly introducing fuel to the exhaust system 7. For example, the post-injection is executed when the deposited amount of PM captured by the DPNR catalyst 76 exceeds a predetermined amount (which is detected by, for example, detecting a difference in pressure between the front and rear of the maniverter 77).

Also, the ECU 100 controls opening degree of the EGR valve 81 according to the operating state of the engine 1 and adjusts an exhaust gas recirculation amount (EGR amount) toward the intake manifold 63. The EGR amount is set in accordance with an EGR map stored in advance in the ROM 102. Specifically, the EGR map is a map to determine the EGR amount (EGR ratio) according to parameters such as engine revolution and engine load. It is noted that the EGR map is produced in advance based on experiment, simulation, or the like. That is, the engine revolution calculated based on the detection value of the crank position sensor 40 and the opening degree (corresponding to engine load) of the throttle valve 62 detected by the throttle opening degree sensor 42 are applied to the EGR map, so that the EGR amount (opening degree of the EGR valve 81) is obtained.

Further, the ECU 100 executes the control of the opening degree of the swirl control valve 66. The control of the opening degree of the swirl control valve 66 is carried out in such a manner as to change a displacement amount in the circumferential direction in the cylinder with respect to a spray of fuel per unit time (or per unit crank rotation angle) injected in the combustion chamber 3.

-Fuel Injection Pressure-

The fuel injection pressure during execution of the fuel injection is determined by the internal pressure of the common rail 22. The common rail internal pressure is generally such that the target value of the fuel pressure supplied from the common rail 22 to the injector 23, that is, the target rail pressure, is set to increase as the engine load increases, and as the engine revolution increases. That is, when the engine load is high, a large amount of air is drawn into the combustion chamber 3, so that it is necessary to inject a large amount of fuel into the combustion chamber 3 from the injector 23. This necessitates high injection pressure from the injector 23. When the engine revolution is high, the period during which injection is executable is short, so that it is necessary to inject a large amount of fuel per unit time. This necessitates high injection pressure from the injector 23. Thus, the target rail pressure is generally set based on the engine load and the engine revolution. It is noted that the target rail pressure is set, for example, in accordance with a fuel pressure setting map stored in the ROM 102. That is, determining the fuel pressure in accordance with the fuel pressure setting map ensures control of a valve opening period (injection rate waveform) of the injector 23, thereby specifying a fuel injection amount during the valve opening period.

It is noted that in the present embodiment, fuel pressure is adjusted between 30 MPa and 200 MPa according to the engine load and the like.

Fuel injection parameters of the pilot injection, the main injection, and like have optimum values that vary according to the temperature conditions of the engine 1, intake air, and the like.

For example, the ECU 100 adjusts the amount of fuel discharged by the supply pump 21 such that the common rail pressure equals to the target rail pressure set based on the engine operating state, that is, such that the fuel injection pressure matches the target injection pressure. Also, the ECU 100 determines the fuel injection amount and the form of fuel injection based on the engine operating state. Specifically, the ECU 100 calculates an engine revolution speed based on the detection signal of the crank position sensor 40 and obtains an amount of depressing of accelerator pedal (accelerator opening degree) based on the output signal of the accelerator opening degree sensor 47, and determines the total fuel injection amount (the sum of the injection amount in the pilot injection and the injection amount of in the main injection) based on the engine revolution speed and the accelerator opening degree.

-Setting of Target Fuel Pressure-

Next, a setting method of the target fuel pressure will be described. In the diesel engine 1, it is important to simultaneously fulfill each of the demands such as an improvement in exhaust emission by reducing the amount of NOx generated and the amount of generated smoke, a reduction in combustion noise during the combustion stroke, and securement of sufficient engine torque. As a technique for simultaneous fulfillment of the demands, it is effective to appropriately control the changing state of the heat production rate (changing state represented in the form of a heat production rate waveform) in the cylinder during the combustion stroke.

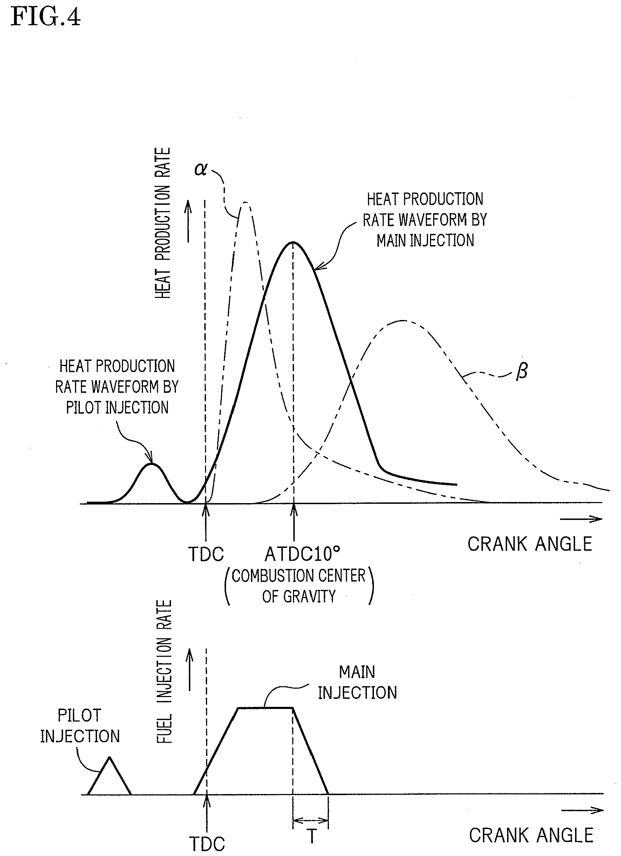

The solid line in the waveform shown in the upper section of FIG. 4 shows an ideal heat production rate waveform regarding the combustion of fuel injected in the pilot injection and the main injection, where the horizontal axis represents the crank angle, and the vertical axis represents the heat production rate. In this figure, TDC shows a crank angle position corresponding to the compression top dead center of the piston 13. The waveform shown in the lower section of FIG. 4 shows an injection rate (fuel injection amount per rotation angle unit of the crankshaft) waveform of fuel injected from the injector 23.

In the heat production rate waveform, for example, the combustion of the fuel injected in the main injection is started in the vicinity of the compression top dead center (TDC) of the piston 13, and the heat production rate reaches a maximum value (peak value) at a predetermined piston position after the compression top dead center of the piston 13 (for example, a time point of 10 degrees after compression top dead center (ATDC 10°)). Further, the combustion of the fuel injected in the main injection is finished at a predetermined piston position (for example, a time point of 25 degrees after compression top dead center (ATDC 25°)) after the compression top dead center. Implementing the combustion of the mixture with this changing state of the heat production rate ensures that the combustion of about 50% of the mixture in the cylinder is completed at a time point of, for example, 10 degrees after combustion top dead center (ATDC 10°). That is, with the time point of 10 degrees (ATDC 10°) after compression top dead center acting as a combustion center of gravity, about 50% of the total amount of heat produced in the expansion process is produced no later than ATDC 10°. This ensures high thermal efficiency in operating the engine 1.

As a relation between the crank angle and the fuel injection rate waveform at the time point of reaching the combustion center of gravity, the combustion center of gravity is positioned in a period from a time point when a fuel injection stop signal is transmitted to the injector 23 up to a time point when the fuel injection completely stops (period T in FIG. 4).

In a state where combustion is carried out according to this ideal heat production rate waveform, the interior of the cylinder is adequately preheated by the pilot injection. According to the preheating, the fuel injected in the main injection is immediately exposed to a temperature environment of equal to or higher than a self-ignition temperature, and thus thermolysis progresses, and after the injection, the combustion immediately starts.

Also, the waveform shown in a dashed double-dotted line α in FIG. 4 is a heat production rate waveform in a case where the fuel injection pressure is set higher than an appropriate value, and both peak values of the combustion speed and the heat production rate are too high, which is in a state where there is an apprehension in that combustion noise increases, and the amount of generated NOx increases. In contrast, a waveform shown in a dashed double-dotted line β in FIG. 4 is a heat production rate waveform in a case where the fuel injection pressure is set lower than an appropriate value, and the combustion speed of fuel is low, and the timing of arriving the peak of the heat production rate is remarkably transferred to the delay angle side, which is a state where there is an apprehension in that the engine torque cannot adequately be secured.

-Evaluation Method of Combustion State-

Next, an evaluation method of a combustion state (determination method of deterioration of a combustion state), which is a feature of the present embodiment, will be described.

(Principle Description of Evaluation Method)

When fuel injection is carried out toward the combustion chamber 3, and most of the fuel is favorably combusted so as to generate an amount of heat, that is, when oxygen concentration and oxygen excess ratio are sufficiently secured in the combustion chamber 3 (for example, the oxygen concentration is equal to or higher than 17 %, and the oxygen excess ratio is equal to or higher than 1.5), and an in-cylinder temperature reaches a self-ignition temperature for the fuel (e.g., 1000K), and an appropriate amount of fuel in accordance with the fuel injection amount instruction value from the ECU 100 is injected from the injector 23, the amount of heat generated per volume unit of fuel in the entire combustion period is constantly a uniform value (uniform even if the fuel injection amount and the fuel injection timing vary). That is, the maximum value of the amount of heat generated per volume unit of the fuel in the entire combustion period is constantly a uniform value (when favorable combustion is carried out, most of the fuel is contributed to the amount of heat generated, and in this case, the amount of heat generated per volume unit is at the maximum).

Whereas if the combustion is favorable, the amount of heat generated per volume unit of the fuel in the entire combustion period of the case where the fuel is actually combusted in the combustion chamber 3 approximately matches the maximum value, if a combustion state deteriorates for some reason, the amount of heat generated per volume unit of the fuel is deviated from the maximum value (for example, less than the maximum value). In the present invention, an occurrence of the deterioration in the combustion state is determined by utilizing this principle.

Specifically, in an inspection target period set in advance (a predetermined inspection target period including at least part of fuel combustion period), a maximum value of the amount of heat generated per volume unit of fuel (hereinafter referred to as "reference heat production efficiency") and the amount of heat generated per volume unit of actual fuel (hereinafter referred to as "actual heat production efficiency") are compared, and based on the difference therebetween (a deviation amount of the actual heat production efficiency with respect to the reference heat production efficiency), it is determined whether there is an occurrence of the deterioration in the combustion state in the combustion chamber 3 (determination operation on whether there is an occurrence of combustion deterioration by a combustion deterioration determination means).

Here, the amount of heat generated per volume unit of fuel is a value that is obtained by dividing an amount of heat generated in the inspection target period by combusting fuel injected from the injector 23 by the finish time of the inspection target period (fuel injected in accordance with a fuel injection amount instruction value), by a fuel amount in accordance with the fuel injection amount instruction value. In other words, the amount of heat generated per volume unit of fuel is an average value of the amount of heat generated per volume unit of the fuel in the inspection target period.

Also, it is necessary to determine a fuel amount in accordance with the fuel injection amount instruction value in order to calculate the amount of heat generated per volume unit of the fuel. That is, the fuel injection with this fuel amount needs to be completed. Accordingly, an end time of the inspection target period is set as a timing after the injection operation of the fuel to carry out combustion in the inspection target period is completed.

In the description below, to readily understand the present invention, there will be described an evaluation method of a combustion state regarding the case where fuel injection is executed once (for example, one-time main injection), and the inspection target period is set as a period from the combustion start time to the combustion finish time of the fuel injected in the one-time fuel injection. There will be described later an evaluation method of the combustion state regarding a case where a predetermined crank angle position is set as the finish time of the inspection target period instead of the combustion finish time, a case where the pilot injection and the main injection are executed, and a case where the inspection target period is set as a partial period of the period from the combustion start time to the combustion finish time (entire period of combustion).

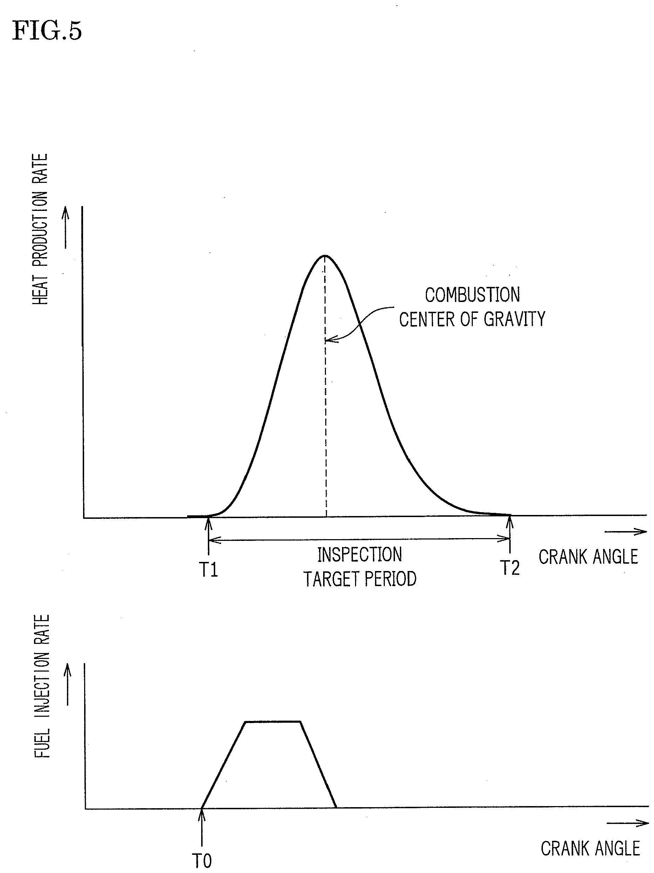

FIG. 5 is diagrams illustrating a heat production rate waveform and a fuel injection rate waveform for the description of the evaluation method of the combustion state. As shown in FIG. 5, when the one-time fuel injection is executed, the combustion of the fuel starts with a slight delay (ignition delay) after the start of the injection (timing T1 in FIG. 5), and the heat production rate gradually increases before reaching a combustion center of gravity. The heat production rate gradually decreases after reaching the combustion center of gravity. When the combustion of the great majority of fuel has completed, the heat production rate reduces to "0" (timing T2 in FIG. 5). When the combustion state like this combustion is evaluated, the entire combustion period (period from the timing T1 to the timing T2 in FIG. 5) is set as the inspection target period, and it is determined whether the amount of heat generated per volume unit of fuel in the inspection target period is within a predetermined range (within an allowable range set in advance based on the reference heat production efficiency), so as to evaluate the combustion state.

It is to be noted that the combustion start timing (timing T1) and the combustion finish timing (timing T2) are obtained based on the variation of in-cylinder pressure detected by the in-cylinder pressure sensor 4B. Also, it may be such that an ignition delay period after fuel injection is calculated based on the in-cylinder environment (sensing value of each sensor) so as to acquire the combustion start timing (timing T1).

As described above, when ideal combustion is carried out, the amount of heat generated per volume unit of fuel in the entire combustion period (inspection target period shown in FIG. 5) is at the maximum value. That is, when the oxygen concentration and oxygen excess ratio are sufficiently secured in the combustion chamber 3, the in-cylinder temperature reaches a self-ignition temperature for the fuel, and an appropriate amount of fuel according to the fuel injection amount instruction value is injected from the injector 23, the great majority of the fuel injected is favorably combusted. Therefore, the amount of heat generated per volume unit of fuel during the combustion period is at the maximum value, that is, the heat is generated at the reference heat production efficiency.

As a concrete value, in the case of diesel fuel, the maximum value of the amount of heat generated per volume unit of fuel (reference heat production efficiency) is 30 J/mm$^3$. This value is experimentally obtained. It is to be noted that the amount of heat generated per mass unit of diesel fuel is 42.94 kJ/g, and the density of diesel fuel is $0.834 \times 10^{-3}$g/mm$^3$. The maximum value of the amount of heat generated per volume unit is theoretically 35.8 J/mm$^3$. However, with regard to the actual fuel (diesel fuel), there exists fuel that does not contribute to heat production in the combustion stroke in the combustion chamber 3 (for example, fuel to carry out combustion in the exhaust stroke, fuel to carry out combustion in the exhaust system 7, or the like), and thus the maximum value of the amount of heat generated per volume unit of actual fuel (reference heat production efficiency) is 30 J/mm$^3$. That is, the general engine 1 operates at an execution ratio of 83.8 % (= 30/35.8).

Incidentally, since the reference heat production efficiency can be defined as described above, the amount of heat generated in the case where ideal combustion is carried out (the maximum value of the amount of heat generated) can be obtained based on the reference heat production efficiency and fuel injection amount (maximum value (J) of amount of heat generated = reference heat production efficiency (J/mm$^3$) $\times$ fuel injection amount (mm$^3$)). Accordingly, the maximum value of the amount of heat generated is set as a reference (the amount of heat generated obtained from the reference heat production efficiency and the fuel injection amount; hereinafter referred to as "reference heat production amount"), and it is possible to determine whether there is an occurrence of the combustion deterioration in the combustion chamber 3 based on the deviation amount of the actual amount of heat generated with respect to the reference heat production amount. In the present invention, this determination method is included in the technical scope. That is, "the reference heat production efficiency and the actual heat production efficiency are compared, and it is determined whether there is an occurrence of the combustion deterioration in the combustion chamber based on the deviation amount between the efficiencies (description of Claims)" is synonymous with "a value obtained by multiplying the reference heat production efficiency by the fuel injection amount (reference heat production amount) and a value obtained by multiplying the actual heat production efficiency by the fuel injection amount (actual heat production amount) are compared, and it is determined whether there is an occurrence of the combustion deterioration in the combustion chamber based on the deviation amount between the values". Specifically, when the fuel injection amount is 20 mm$^3$, the reference heat

production amount is 600 J, and it is determined whether there is an occurrence of the combustion deterioration in the combustion chamber 3 based on the deviation amount of the actual heat production amount with respect to the reference heat production amount.

The inventor of the present invention carried out the experiments to confirm that the reference heat production efficiency is 30 J/mm$^3$.

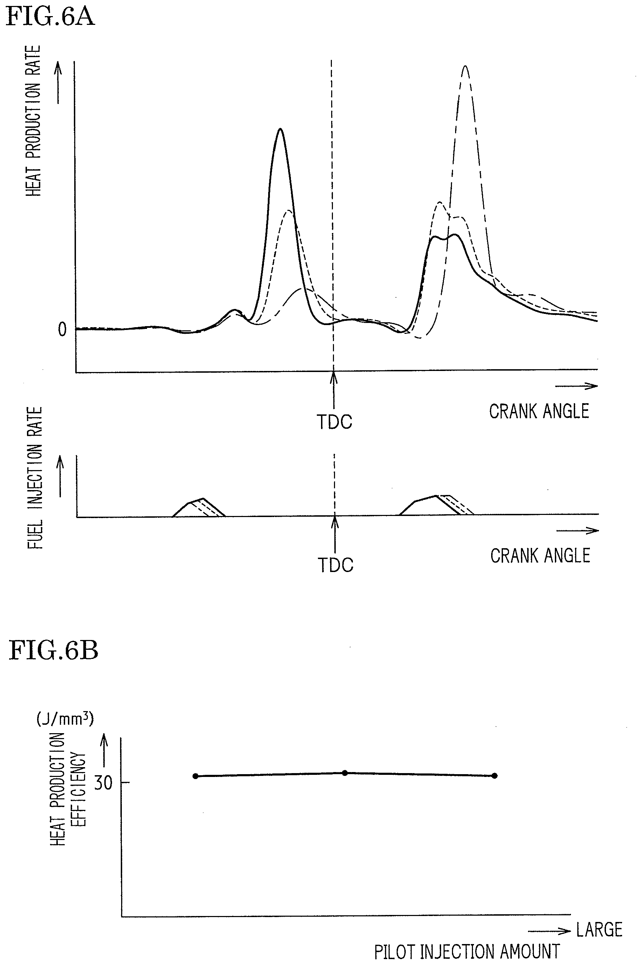

FIG. 6 shows experimental results in a case where ideal combustion in the combustion chamber 3 (combustion in the case where oxygen concentration and oxygen excess ratio are sufficiently secured in the combustion chamber 3, the in-cylinder temperature reaches a self-ignition temperature for the fuel, and an appropriate amount of fuel according to a fuel injection amount instruction value is injected from the injector 23) is carried out with various fuel injection amounts (injection amounts of the pilot injection and the main injection respectively). FIG. 6A shows a heat production rate waveform and a fuel injection rate waveform of each fuel injection. FIG. 6B shows a relation between a fuel injection amount (fuel injection amount in the pilot injection) and a heat production efficiency (the amount of heat generated per volume unit of fuel with respect to the total period of the combustion period of fuel injected in the pilot injection and the combustion period of fuel injected in the main injection). In FIG. 6, a solid line represents a case where a pilot injection amount is 16 mm$^3$, and a main injection amount is 19 mm$^3$, a dashed line represents a case where a pilot injection amount 12 mm$^3$, and a main injection amount is 23 mm$^3$, a dashed-dotted line represents a case where a pilot injection amount 8 mm$^3$, and a main injection amount is 27 mm$^3$. As obviously shown in FIG. 6B, the amount of heat generated per volume unit of fuel (reference heat production efficiency) is about 30 J/mm$^3$ in the case where ideal combustion is carried out even if the fuel injection amount varies among injections.

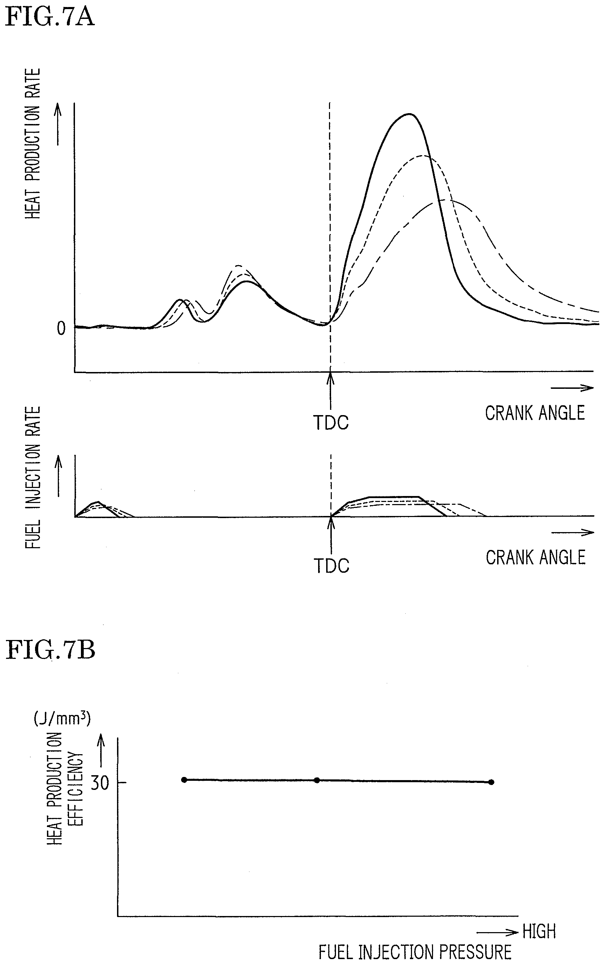

FIG. 7 shows experimental results in a case where ideal combustion in the combustion chamber 3 is carried out based on various fuel injection pressures (rail pressure). FIG. 7A shows a heat production rate waveform and a fuel injection rate waveform of each fuel injection pressure, and FIG. 7B shows a relation between fuel injection pressure and heat production efficiency. FIG. 7A shows experimental results in a case where the fuel injection pressure is set higher in the order of the dashed-dotted line, the dashed line, and the solid line. As obviously shown in FIG. 7B, the amount of heat generated per volume unit of fuel (reference heat production efficiency) is about 30 J/mm$^3$ in the case where ideal combustion is carried out even if the fuel injection pressure varies.

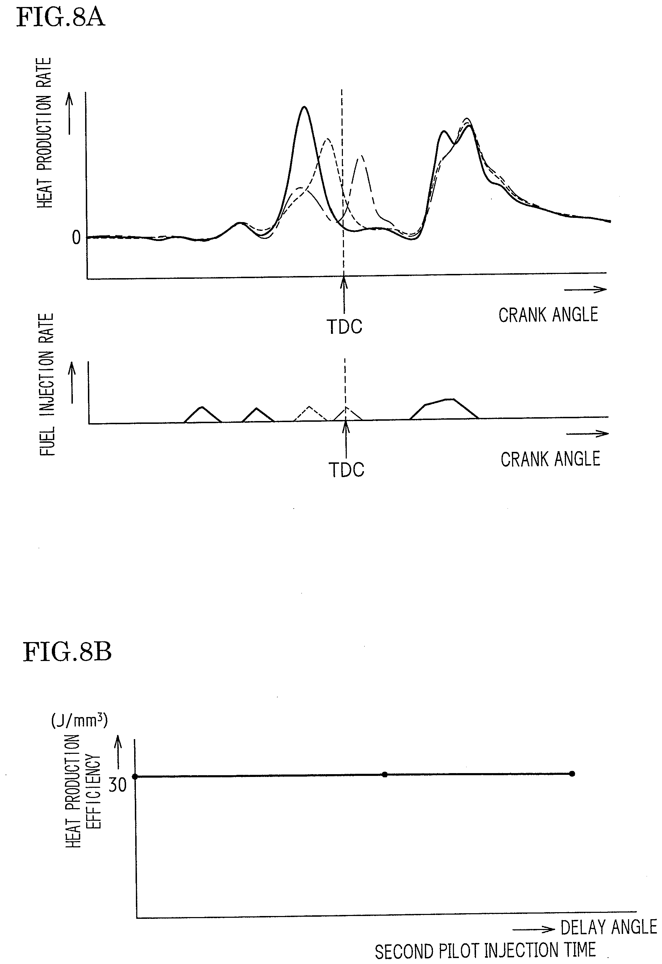

FIG. 8 shows experimental results in a case where ideal combustion in the combustion chamber 3 is carried out with different fuel injection timings (injection timing of the second pilot injection in the case where the pilot injection is executed twice). FIG. 8A shows a heat production rate waveform and a fuel injection rate waveform of each fuel injection timing, and FIG. 8B shows a relation between the fuel injection timing and the heat production efficiency. FIG. 8A shows experimental results in a case where the fuel injection timing of the second pilot injection is advanced in the order of the dashed-dotted line, the dashed line, and the solid line. As obviously shown in FIG. 8B, the amount of heat generated per volume unit of fuel (reference heat production efficiency) is about 30 J/mm$^3$ in the case where ideal combustion is carried out even if the fuel injection timing varies.

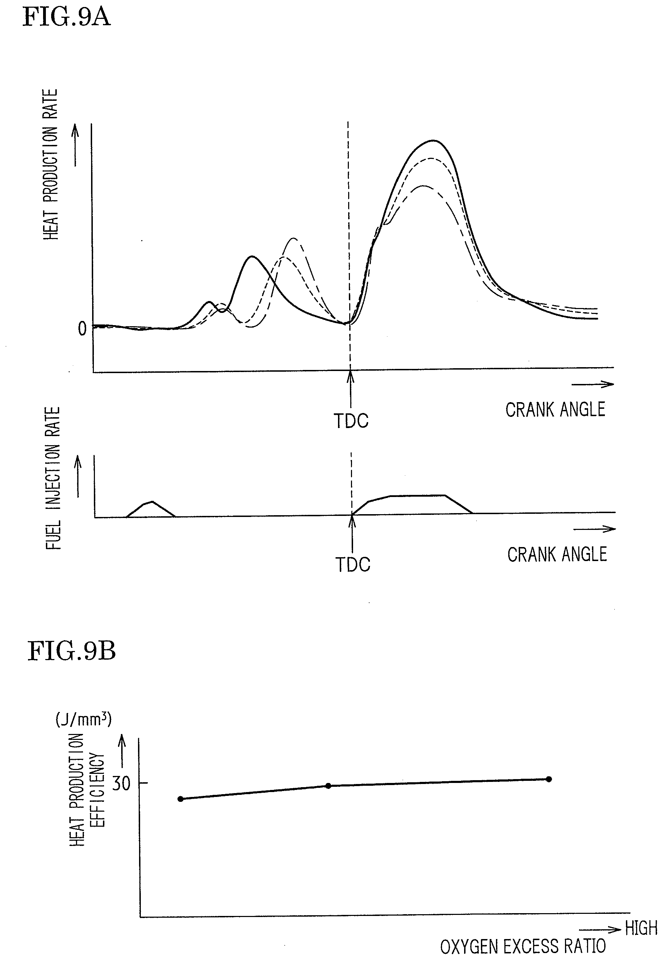

Further, FIG. 9 shows experimental results in a case where ideal combustion in the combustion chamber 3 is carried out with various oxygen excess ratios. FIG. 9A shows a heat production rate waveform and a fuel injection rate waveform of each oxygen excess ratio, and FIG. 9B shows a relation between the oxygen excess ratio and the heat production efficiency. FIG. 9A shows experimental results in a case where the oxygen excess ratio is increased in the order of the dashed-dotted line, the dashed line, and the solid line. As obviously shown in FIG. 9B, the amount of heat generated per volume unit of fuel (reference heat production efficiency) is about 30 J/mm$^3$ in the case where the oxygen excess ratio is within an appropriate range and ideal combustion is carried out, even if the oxygen excess ratio varies.

Thus, in the case of diesel fuel, the maximum value of the amount of heat generated per volume unit of fuel in the entire combustion period is about 30 J/mm$^3$. That is, when the amount of heat generated per volume unit of fuel in the entire period from the combustion start to the combustion finish is about 30 J/mm$^3$ in the actual combustion in the combustion chamber 3, it is determined that the combustion is the ideal combustion in which the great majority of injection fuel is combusted.

By utilizing this principle, in the present embodiment, a combustion state is evaluated by determining whether the actual heat production efficiency is within an allowable range set in advance (hereinafter simply referred to as "within an allowable range") with respect to the reference heat production efficiency (30 J/mm$^3$) (whether the deviation amount from the reference heat production efficiency is within the allowable range). For example, when the reference heat production efficiency is 30 J/mm$^3$, the allowable range is set as a range of "25 J/mm$^3$ ≤ actual heat production efficiency ≤ 30 J/mm$^3$". In this case, a threshold value of the deviation amount of the actual heat production efficiency with respect to the reference heat production efficiency ranges from "0 J/mm$^3$" on the positive side to "-5 J/mm$^3$" on the negative side.

As described above, FIG. 5 is diagrams illustrating a heat production rate waveform and a fuel injection rate waveform for the description of the evaluation method of the combustion state. In this case, a period from the combustion start to the combustion finish is a period from the timing T1 to the timing T2 in the diagram. The total amount of heat generated by the combustion of the fuel in this period is detected, and the detected total amount of heat generated is divided by the fuel amount in accordance with the fuel injection amount instruction value (the fuel injection amount to be instructed) so as to calculate the actual heat production efficiency. The total amount of heat generated is obtained based on the in-cylinder pressure detected by the in-cylinder pressure sensor 4B.

-Correction Operation Corresponding to Evaluation Results of Combustion State-

When the actual heat production efficiency thus calculated is within the allowable range (25 J/mm$^3$ ≤ actual heat production efficiency ≤ 30 J/mm$^3$), it is determined that the ideal combustion is carried out in the combustion chamber 3, and it is not necessary to correct the fuel injection mode.

In contrast, when the actual heat production efficiency thus calculated is lower than the allowable range (when the deviation amount of the actual heat production efficiency with respect to the reference heat production efficiency exceeds the threshold value, 5 J/mm$^3$, on the lower side), it is determined that the appropriate amount of heat is not obtained in the combustion chamber 3, and the combustion state is deteriorated. Also, when the actual heat production efficiency is higher than the allowable range (higher than the reference heat production efficiency), it is determined that the excessive amount of fuel is injected from the injector 23 with respect to the fuel amount in accordance with the fuel injection amount instruction value (the fuel injection amount to be instructed), and similarly, the appropriate amount of heat is not obtained in the combustion chamber 3, and the combustion state is deteriorated. When it is thus determined that the combustion state is deteriorated, the improvement of the combustion state is achieved by correcting the fuel injection mode and the like (correcting operation of fuel injection mode by a correction means). Hereinafter, a concrete example will be described.

(Case where Actual Heat Production Efficiency is Lower than Allowable Range)

When the actual heat production efficiency is lower than the allowable range, for example, when the reference heat production efficiency is 30 J/mm$^3$, and the actual heat production efficiency is 24 J/mm$^3$, it is determined that the amount of heat generated in the inspection target period is not sufficient, and thus the correction to increase the fuel injection amount is carried out. That is, it is determined that the environmental conditions in the combustion chamber 3 is deteriorated (a lack of the amount of oxygen or nonattainment in terms of in-cylinder temperature of combustion) or the fuel amount that is actually injected in accordance with the fuel injection amount instruction value is insufficient, and thus the correction to increase the fuel injection amount is carried out.

Also, when improvement (improvement by which the actual heat production efficiency approaches the reference heat production efficiency) of the actual heat production efficiency is not achieved even when the correction to increase the fuel injection amount is carried out, it is determined that the cause for which the actual heat production efficiency is lower than the allowable range is attributed to the malfunction of the intake system 6, and thus the correction to increase the amount of oxygen introduced into the combustion chamber 3 is carried out. For example, decreasing the amount of EGR gas by reducing the opening degree of the EGR valve 81 or increasing a supercharging amount by controlling the variable nozzle vane mechanism of the turbocharger 5 (reducing the opening degree of the nozzle vane).

(Case where Actual Heat Production Efficiency is Higher than Allowable Range)

When the actual heat production efficiency is higher than the allowable range, for example, when the reference heat production efficiency is 30 J/mm$^3$, and the actual heat production efficiency is 32 J/mm$^3$, it is determined the fuel amount that is actually injected in accordance with the fuel injection amount instruction value is excessive, and thus the correction to decrease the fuel injection amount is carried out.

(Improvement Operation of Combustion State)

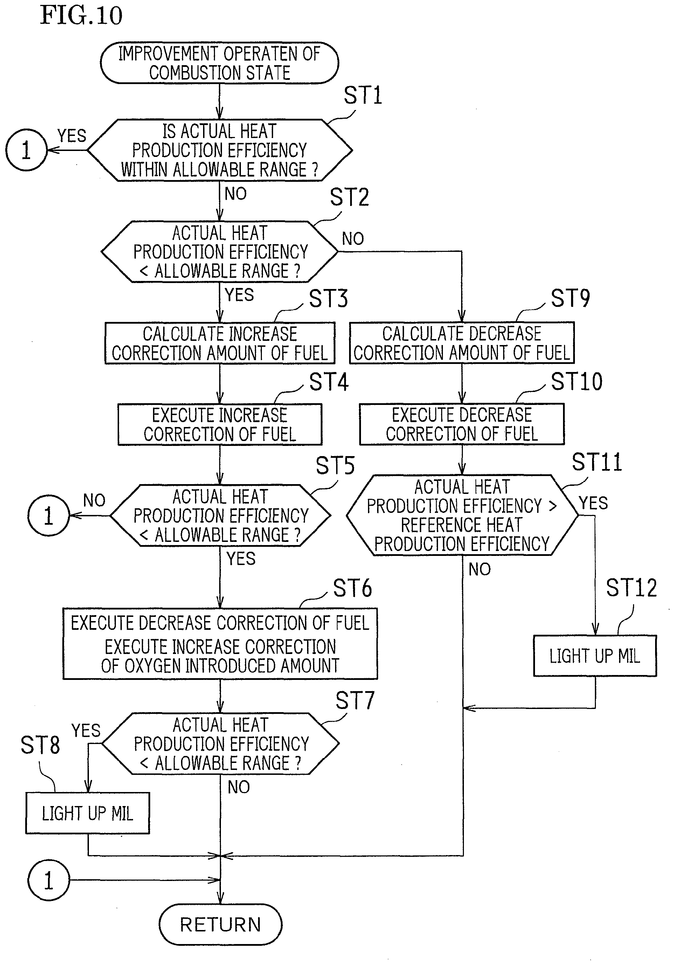

Next, a concrete operation to achieve the improvement of the combustion state described above will be described along with a flowchart of FIG. 10. The flowchart shown in FIG. 10 is executed every time the combustion stroke is carried out in the combustion chamber 3 after the start of the engine 1.

First, at step ST1, it is determined whether the actual heat production efficiency is within the allowable range (for example, 25 J/mm$^3$ ≤ actual heat production efficiency ≤ 30 J/mm$^3$). When the actual heat production efficiency is within the allowable range, and thus it is determined to be YES at step ST1, it is determined that the combustion state in the combustion chamber 3 is favorable, and the process returns without correcting fuel injection mode and the like.

On the other hand, when the actual heat production efficiency is not within the allowable range, and thus it is determined to be NO at step ST1, and the process moves to step ST2, where it is determined whether the actual heat production efficiency is lower than the allowable range, that is, whether the amount of heat generated in the combustion chamber 3 is insufficient.

When the actual heat production efficiency is lower than the allowable range, and thus it is determined to be YES at step ST2, the process moves to step ST3, where the increase correction amount in increase correction for the fuel injection amount is calculated. As a calculation method of the increase correction amount, a mathematical formula to calculate the increase correction amount in accordance with the deviation of the actual heat production efficiency with respect to the reference heat production efficiency is stored in the ROM 102 in advance, and the increase correction amount is calculated by substituting the present deviation in the mathematical formula (deviation of the actual heat production efficiency with respect to the reference heat production efficiency). Calculation formula (1) below is one example of such mathematical formula.

$$\text{Increase correction amount of fuel} = (\text{current instructed fuel injection amount} \times$$
$$\text{reference heat production efficiency} / \text{actual heat production efficiency}) - \text{current instructed}$$
$$\text{fuel injection amount} \qquad (1)$$

After the increase correction amount of fuel is thus calculated, the process moves to step ST4, where the fuel injection amount is increased by the thus calculated increase correction amount, and the fuel injection is executed. In this case, with respect to the combustion stroke in which the actual heat production efficiency is lower than the allowable range, the fuel injection with the fuel injection amount that is increased by correction is executed in the next cylinder in which the combustion stroke takes place. Also, it may be such that the fuel injection with the fuel injection amount that is increased by correction is executed in the same cylinder in the next combustion stroke.

Then, at step ST5, it is determined whether the actual heat production efficiency is lower than the allowable range again, that is, whether the amount of heat generated in the combustion chamber 3 is insufficient.

When the actual heat production efficiency increases up to the allowable range, and thus it is determined to be NO at step ST5, it is determined that the combustion state in the combustion chamber 3 is improved, and the process returns.

In contrast, when the actual heat production efficiency is still lower than the allowable range after the increase correction of the fuel injection amount, and thus it is determined to be YES at step ST5, it is determined that the actual heat production efficiency is lower than the allowable range is not due to the lack of the fuel injection amount in the combustion chamber 3 (that is, malfunction has not occurred in the fuel injection system), but due to the lack of the oxygen amount in the combustion chamber 3 (that is, malfunction has occurred in the intake system 6). At step 6, the fuel injection amount that has been increased is decreased by correction (returned to the fuel injection amount prior to the increase correction), and the amount of oxygen introduced to the combustion chamber 3 is increased by correction. For example, when the EGR valve 81 is opened, and the EGR gas is introduced to the intake system 6, the amount of oxygen introduced to the combustion chamber 3 is increased by correction, by reducing the opening degree of or fully closing the EGR valve 81. Otherwise, the actuator provided in the variable nozzle vane mechanism of the turbocharger 5 is controlled so as to enhance the supercharging pressure, and thus the amount of oxygen introduced to the combustion chamber 3 is increased by correction.

After the amount of oxygen introduced to the combustion chamber 3 is thus increased by correction, the process moves to step ST7, where it is determined whether the actual heat production efficiency is lower than the allowable range again, that is, whether the amount of heat generated in the combustion chamber 3 is insufficient.

When the actual heat production efficiency increases up to the allowable range, and the determination is NO at step ST7, it is determined that the combustion state in the combustion chamber 3 is improved, and the process returns.

In contrast, when the actual heat production efficiency is still lower than the allowable range after the increase correction of the amount of oxygen introduced to the combustion chamber 3, and thus it is determined to be YES at step ST7, it is determined that some kind of malfunction has occurred and it is impossible to increase the actual heat production efficiency up to the allowable range, which causes MIL (Malfunction Indicator Lamp) on a meter panel in the vehicle compartment to light up, so as to urge the driver to bring the vehicle to inspection and maintenance.

In contrast, at step ST2, when the actual heat production efficiency is higher than the allowable range (higher than the reference heat production efficiency), and thus it is determined to be NO at step ST2, the process moves to step ST9, where the decrease correction amount in decrease correction for the fuel injection amount is calculated. Calculation formula (2) below is one example of a calculation formula for the amount of correction decreased.

$$\text{Decrease correction amount of fuel} = \text{current instructed fuel injection amount} -$$

$$(\text{current instructed fuel injection amount} \times \text{reference heat production efficiency} / \text{actual heat}$$

$$\text{production efficiency}) \qquad (2)$$

After the decrease correction amount of fuel is thus calculated, the process moves to step ST10, where the fuel injection amount is decreased by the calculated decrease correction amount, and the fuel injection is executed. In this case, with respect to the combustion stroke in which the actual heat production efficiency is higher than the allowable range, the fuel injection with the fuel injection amount that is decreased by correction is executed in the next cylinder in which the combustion stroke takes place. Also, it may be such that the fuel injection with the fuel injection amount that is decreased by correction is executed in the same cylinder in the next combustion stroke.

Then, at step ST11, it is determined whether the actual heat production efficiency is higher than the allowable range, that is, whether the fuel amount actually injected is still larger than the fuel injection amount instruction value.

When the actual heat production efficiency is no longer higher than the reference heat production efficiency, and thus it is determined to be NO at step ST11, it is determined that the combustion state in the combustion chamber 3 is improved, and the process returns.

In contrast, when the actual heat production efficiency is still higher than the reference heat production efficiency after the decrease correction of the fuel, and thus it is determined to be YES at step ST11, it is determined that some kind of malfunction has occurred, and it is impossible to decrease the actual heat production efficiency up to the allowable range, which causes MIL on a meter panel in the vehicle compartment to light up, so as to urge the driver to bring the vehicle to inspection and maintenance.

As described above, in the present embodiment, it is determined whether there is an occurrence of the deterioration in the combustion state by comparing the actual heat production efficiency with the reference heat production efficiency in the inspection target period. The actual heat production efficiency and the reference heat production efficiency can be quantitatively obtained, even if the engine types and the fuel injection amount vary. Accordingly, in the present embodiment, it is not necessary to individually define the evaluation reference of the combustion state for each engine type and each fuel injection amount, and it is possible to establish the comprehensive evaluation reference of the combustion state common to various engine types and various fuel injection amounts. As a result, the quantification of the evaluation reference of the combustion state can be achieved, and the simplification of evaluation operation can be achieved.

Also, since it is determined whether there is an occurrence of the deterioration in the combustion state in the combustion chamber 3 by comparing the actual heat production efficiency with the reference heat production efficiency (comparing numerical values), it is possible to evaluate the combustion state with a relatively simple mathematical operation and make it easy to set the determination reference to determine whether there is the occurrence of the deterioration in the combustion state, compared with a conventional evaluation of the combustion state based on the comparison of heat production rate waveforms (pattern matching).

Also, the actual heat production efficiency and the reference heat production efficiency are obtained as an average value of the amount of heat generated per volume unit of fuel in the inspection target period and obtained as a value having a small margin of error. As a result, the accuracy of determination on whether there is the presence of the deterioration in the combustion state can highly be enhanced.

-Modification of Inspection Target Period-

In the embodiment described above, the case has been described where the inspection target period is set as the period from the combustion start time to the combustion finish time of the fuel injected in the one-time fuel injection. Hereinafter, modifications of the inspection target period will be described.

(First Modification of Inspection Target Period)

An inspection target period according to the present modification is such that the finish time of the inspection target period is set to a predetermined crank angle position. For example, a time point of 25 degrees after compression top dead center (ATDC 25°) with respect to a combustion period of fuel injected in the main injection is set as the finish time of the inspection target period.

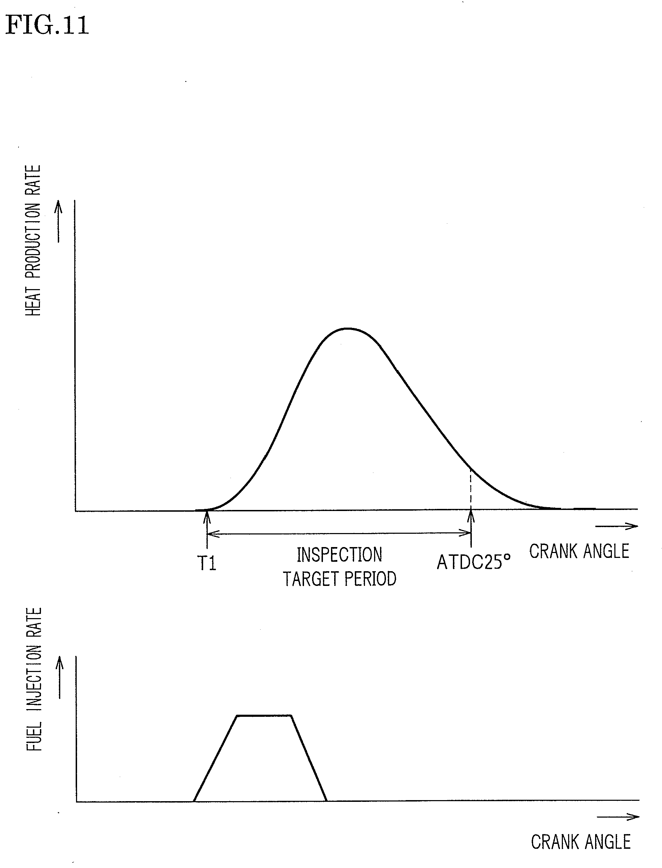

FIG. 11 is diagrams illustrating the heat production rate waveform and the fuel injection rate waveform for the description of the evaluation method of the combustion state where the start time of the inspection target period is set to the combustion start time of the fuel injected in the main injection (timing T1 in FIG. 11; for example, the compression top dead center (TDC) of the piston 13), and the finish time of the inspection target period is set to the time point of 25 degrees after compression top dead center (ATDC 25°).

When the combustion state in the combustion chamber 3 is favorable, and the ignition delay is within the allowable range, combustion of the great majority of the fuel injected in the main injection is completed by the time point of 25 degrees after compression top dead center (see the ideal heat production rate waveform described with FIG. 4), and the actual heat production efficiency (actual heat production efficiency in the combustion period from the combustion start time to the time point of 25 degrees after compression top dead center) is obtained as a value that approximately matches the reference heat production efficiency (30 J/mm$^3$). In contrast, as shown in FIG. 11, when the ignition delay exceeds the allowable range, the combustion of the fuel continues after the time point of 25 degrees after compression top dead center. In this case, the actual heat production efficiency in the combustion period from the combustion start time to the time point of 25 degrees after compression top dead center is lower than the reference heat production efficiency (30 J/mm$^3$), and for example, the actual heat production efficiency is 24 J/mm$^3$.

By thus setting the crank angle position (ATDC 25°) at which the combustion of the fuel injected in the main injection should be completed as the finish time of the inspection target period, it can be determined whether the combustion of the fuel injected in the main injection is favorable (whether the ignition delay occurs).

In this example, when the actual heat production efficiency is lower than the allowable range, it is determined that the ignition delay of the combustion of the fuel injected in the main injection has occurred due to a lack of the preheating amount in the pilot injection, and thus correction to increase the amount of the pilot injection is carried out. In contrast, when the actual heat production efficiency is higher than the allowable range, the fuel injection amount is corrected to be decreased.

It is noted that the method of the determination on whether there is an occurrence of the deterioration in the combustion state with the finish time of the inspection target period set to the predetermined crank angle position can be applied not only to the combustion of the main injection, but also to the combustion of the pilot injection.

(Second Modification of Inspection Target Period)

An inspection target period according to the present modification is set as a period from the combustion start time of the fuel injected in the pilot injection to combustion finish time of the fuel injected in the main injection in the case where the pilot injection and the main injection are executed, and in the case where the heat production rate waveform of the pilot injection and the heat production rate waveform of the main injection overlap, that is, in the case where the combustion of the fuel injected in the main injection starts before the combustion of the fuel injected in the pilot injection finishes.

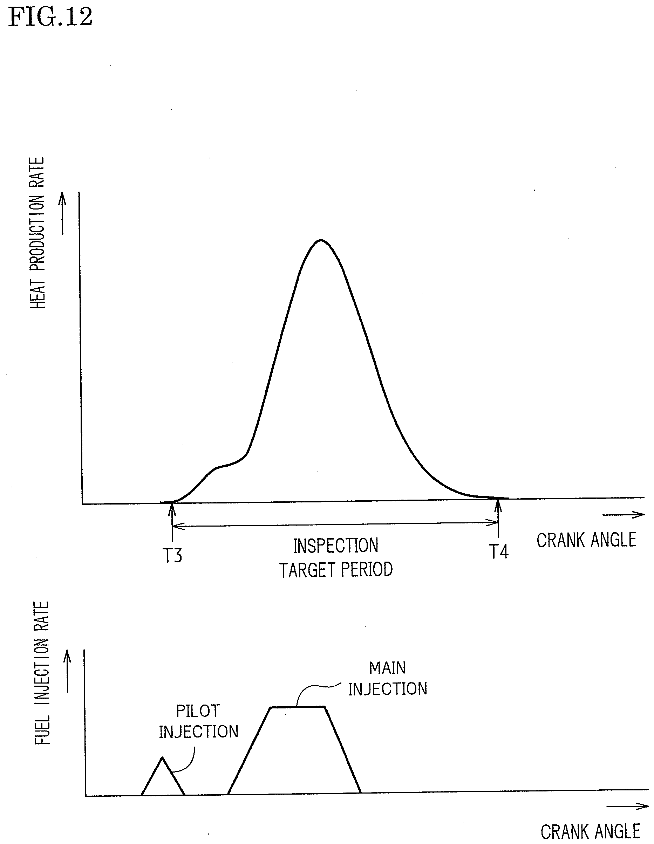

FIG. 12 is diagrams illustrating a heat production rate waveform and a fuel injection rate waveform for the description of the evaluation method of the combustion state in the case where the inspection target period is set above. The inspection target period is set as a period from a timing T3 (combustion start time of the fuel injected in the pilot injection) to a timing T4 (combustion finish time of the fuel injected in the pilot injection) in FIG. 12.

In this case, the combustion of the fuel injected in the pilot injection and the combustion of the fuel injected in the main injection are considered as one consecutive combustion. The reference heat production efficiency is defined and the actual heat production efficiency is calculated with the inspection target period set as a period from the combustion start time of the fuel injected in the pilot injection to the combustion finish time of the fuel injected in the main injection, and these efficiencies are compared to evaluate the combustion state. The reference heat production efficiency of this case is also defined as 30 J/mm$^3$.

The evaluation method and combustion improvement operation after evaluation according to this example are similar to those of the embodiment described above.

(Third Modification of Inspection Target Period)

An inspection target period according to the present modification is such that, in the case where the pilot injection and the main injection are executed, and in the case where the heat production rate waveform of the pilot injection and the heat production rate waveform of the main injection are independent from each other, an inspection target period for the pilot injection is set as a period from the combustion start to the combustion finish of the fuel injected in the pilot injection, and an inspection target period for the main injection is set as a period from the combustion start to the combustion finish of the fuel injected in the main injection.

That is, if the amount of heat generated by the combustion of the fuel injected in the main injection is produced after the amount of heat generated by the combustion of the fuel injected in the pilot injection reduces to "0", each combustion can be regarded as individual combustion, and it is possible to individually set the inspection target period for each combustion and evaluate the combustion state.

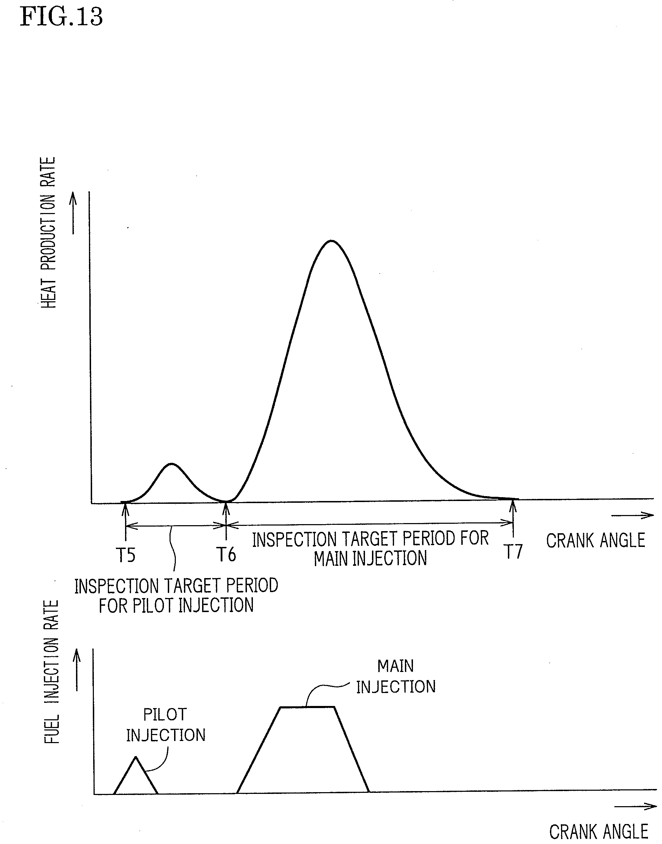

FIG. 13 is diagrams illustrating a heat production rate waveform and a fuel injection rate waveform for the description of the evaluation method of the combustion state in the case where the inspection target period is thus set. The inspection target period for the pilot injection is set as a period from a timing T5 (combustion start time of the fuel injected in the pilot injection) to a timing T6 (combustion finish time of the fuel injected in the pilot injection). Also, the inspection target period for the main injection is set as a period from the timing T6 (combustion start time of the fuel injected in the main injection; in this case, the combustion finish time of the fuel injected in the pilot injection matches the combustion start time of the fuel injected in the main injection) to a timing T7 (combustion finish time of the fuel injected in the main injection).

In this case, the reference heat production efficiency in the inspection target period for the pilot injection and inspection target period for the main injection respectively is also defined as 30 J/mm$^3$. Also, the actual heat production efficiency in the inspection target period for the pilot injection is a value that is obtained by dividing an amount of heat generated in the combustion period (in the period from the timing T5 to the timing T6) of the fuel injected in the pilot injection by a fuel amount according to the fuel injection amount instruction value of the pilot injection. Also, the actual heat production efficiency in the inspection target period for the main injection is a value that is obtained by dividing an amount of heat generated in the combustion period (in the period from the timing T6 to the timing T7) of the fuel injected in the main injection by a fuel amount according to the fuel injection amount instruction value of the main injection.

The evaluation method and combustion improvement operation after evaluation according to this example are similar to those of the embodiment described above.

(Fourth Modification of Inspection Target Period)

An inspection target period according to the present modification is such that the finish time of the inspection target period is set to a predetermined crank angle position, and the reference heat production efficiency is set to a value that is lower than 30 J/mm$^3$. For example, for a combustion period of fuel injected in the main injection, a time point of 18 degrees after compression top dead center (ATDC 18°) is set as the finish time of the inspection target period.

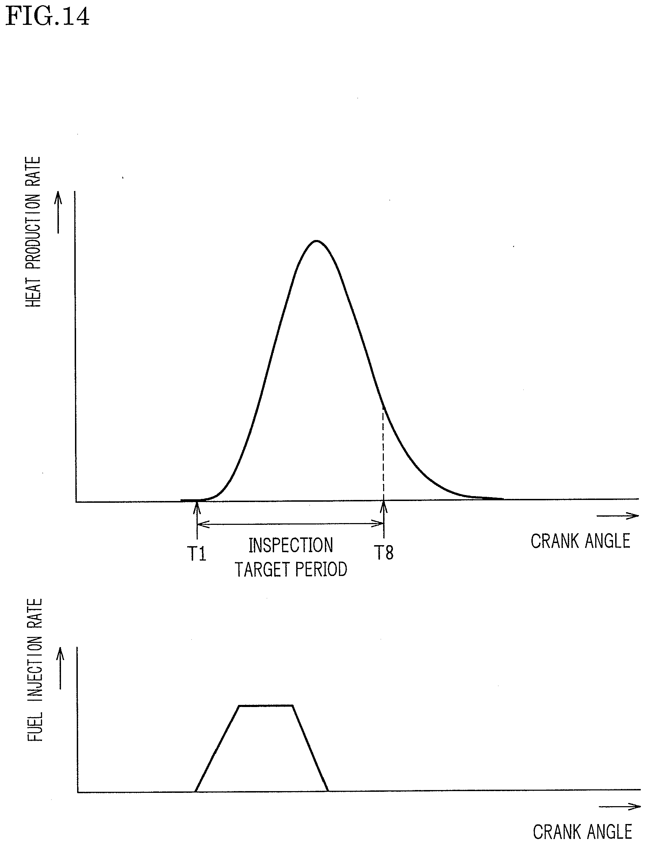

FIG. 14 is diagrams illustrating the heat production rate waveform and the fuel injection rate waveform for the description of the evaluation method of the combustion state with the start time of the inspection target period set to the combustion start time of the fuel injected in the main injection (timing T1 in FIG. 14), and the finish time of the inspection target period set to the time point of 18 degrees after compression top dead center (ATDC 18°; timing T8 in FIG. 14).

While the combustion state in the combustion chamber 3 is favorable (see the heat production rate waveform in FIG. 14), the combustion of the fuel continues after the finish time of the inspection target period (after the timing T8). In this case, the maximum value of the amount of heat generated per volume unit of the fuel is set as a value that is lower than 30 J/mm$^3$ (the reference heat production efficiency in the case where the entire period of combustion is set as the inspection target period (inspection target period shown in FIG. 5)). This is because the heat production efficiency is obtained by dividing the amount of heat generated in the inspection target period by the fuel amount according to the fuel injection amount instruction value, but in the above-described case, the amount of heat generated in the inspection target period is not produced by the combustion of the total amount of fuel according to the fuel injection amount instruction value but produced by the combustion of part the fuel, and therefore, the maximum value of the amount of heat generated per volume unit of the fuel (reference heat production efficiency) is lower than 30 J/mm$^3$. For example, the maximum value is set as 25 J/mm$^3$. This value is set by multiplying the reference heat production efficiency (30 J/mm$^3$) of the case where the entire period of the combustion period is set as the inspection target period, by a predetermined ratio. For example, this value is obtained by multiplying the heat production amount in the entire combustion period in which the ideal combustion is carried out, by a ratio of the amount of heat generated in the inspection target period. Also, this value may be obtained based on an experiment, a simulation, or the like.

That is, when ideal combustion is carried out in the combustion chamber 3 (combustion in the case where the oxygen concentration and oxygen excess ratio are sufficiently secured in the combustion chamber 3, the in-cylinder temperature reaches a self-ignition temperature for the fuel, and the amount of fuel according to a fuel injection amount instruction value is injected from the injector 23), the reference heat production efficiency at a time point of 18 degrees after compression top dead center is obtained in advance, and the reference heat production efficiency and the actual heat production efficiency are compared. If the actual heat production efficiency is within the allowable range set in advance with respect to 25 J/mm$^3$ (for example, 20 J/mm$^3$ $\leq$ actual heat production efficiency $\leq$ 25 J/mm$^3$), it can be determined that the combustion is the ideal combustion. That is, the combustion state is evaluated based on the determination on whether the actual heat production efficiency is within the allowable range (whether the deviation amount from the reference heat production efficiency is within the allowable range).

As in the embodiment described above, when the actual heat production efficiency is lower than the allowable range, first, the fuel injection amount is increased by correction. When the actual heat production efficiency continues to be lower than the allowable range after the increase correction of the fuel injection amount, the fuel injection amount is decreased by correction, and the amount of oxygen introduced is increased by correction. In contrast, when the actual heat production efficiency is higher than the allowable range, the fuel injection amount is decreased by correction.

In this example, the calculation of the actual heat production efficiency can start at the time of reaching the timing T8, and the acquisition time of the actual heat production efficiency can be obtained early, which makes it possible to determine whether there is the occurrence of the deterioration in the combustion state in the combustion chamber 3 early.

It is noted that the method of the determination on whether there is an occurrence of the deterioration in the combustion state with the finish time of the inspection target period set to the predetermined crank angle position can be applied not only to the combustion of the main injection, but also to the combustion of the pilot injection.

(Fifth Modification of Inspection Target Period)

An inspection target period according to the present modification is such that the start time of the inspection target period is set to a predetermined crank angle position, and the reference heat production efficiency is set to a value that is lower than 30 J/mm$^3$. For example, for a combustion period of fuel injected in the main injection, a time point of 8 degrees after compression top dead center (ATDC 8°) is set as the start time of the inspection target period.

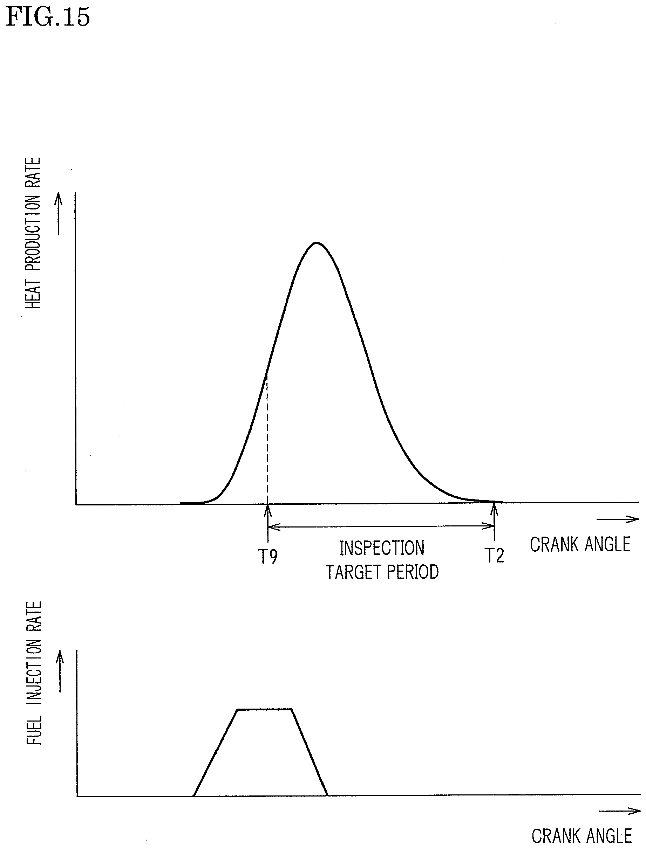

FIG. 15 is diagrams illustrating the heat production rate waveform and the fuel injection rate waveform for the description of the evaluation method of the combustion state where, for example, when the combustion of the fuel injected in the main injection starts at compression top dead center (TDC), the start time of the inspection target period is set to the time point of 8 degrees after compression top dead center (ATDC 8°; timing T9 in FIG. 15), and the finish time of the inspection target period is set to the combustion finish time of fuel injected in the main injection (timing T2 in FIG. 15).

In this case, while the combustion state in the combustion chamber 3 is favorable (see the heat production rate waveform in FIG. 15), the combustion of the fuel has already started prior to the start time of the inspection target period (prior to the timing T9). Thus, in this case also, the maximum value of the amount of heat generated per volume unit of the fuel in the inspection target period (reference heat production efficiency) is set as a value that is lower than 30 J/mm$^3$. For example, the maximum value is set as 25 J/mm$^3$. This value is set by multiplying the reference heat production efficiency (30 J/mm$^3$) of the case where the entire period of the combustion period is set as the inspection target period, by a predetermined ratio. For example, this value is obtained by multiplying the heat production amount in the entire period of the combustion period in which the ideal combustion is carried out, by a ratio of the amount of heat generated in the inspection target period. Also, this value may be obtained based on an experiment, a simulation, or the like.

That is, when ideal combustion is carried out in the combustion chamber 3 (combustion in the case where the oxygen concentration and oxygen excess ratio are sufficiently secured in the combustion chamber 3, the in-cylinder temperature reaches a self-ignition temperature for the fuel, and the amount of fuel according to a fuel injection amount instruction value is injected from the injector 23), the reference heat production efficiency in the inspection target period described above is obtained in advance, and the reference heat production efficiency and the actual heat production efficiency are compared. If the actual heat production efficiency is within the allowable range set in advance with respect to 25 J/mm$^3$ (for example, 20 J/mm$^3 \leq$ actual heat production efficiency $\leq$ 25 J/mm$^3$), it can be determined that the combustion is the ideal combustion. That is, the combustion state is evaluated based on the determination on whether the actual heat production efficiency is within the allowable range (whether the deviation amount from the reference heat production efficiency is within the allowable range).

The evaluation method and combustion improvement operation after evaluation according to this example are similar to those of the embodiment described above.

It is to be noted that the method of the determination on whether there is the occurrence of the deterioration in the combustion state with the start time of the inspection target period set to the predetermined crank angle position can be applied not only to the combustion of the main injection, but also to the combustion of the pilot injection.

(Sixth Modification of Inspection Target Period)

An inspection target period according to the present modification is such that the start time and the finish time of the inspection target period are set to predetermined crank angle positions respectively, and the reference heat production efficiency is set to a value that is lower than 30 J/mm$^3$. For example, with respect to a combustion period of fuel injected in the main injection (entire combustion period), a time point of 8 degrees after compression top dead center (ATDC 8°) is set as the start time of the inspection target period, and a time point of 18 degrees after compression top dead center (ATDC 18°) is set as the finish time of the inspection target period.

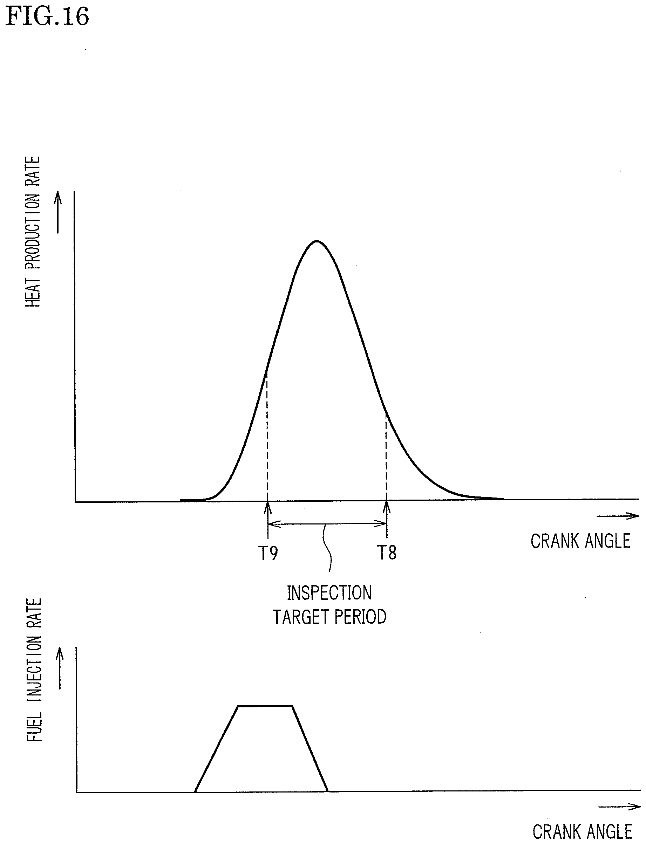

FIG. 16 is diagrams illustrating the heat production rate waveform and the fuel injection rate waveform for the description of the evaluation method of the combustion state with the start time of the inspection target period set to the time point of 8 degrees after compression top dead center (ATDC 8°; timing T9 in FIG. 16), and the finish time of the inspection target period set to the time point of 18 degrees after compression top dead center (ATDC 18°; timing T8 in FIG. 16).

In this case, while the combustion state in the combustion chamber 3 is favorable (see the heat production rate waveform in FIG. 16), the combustion of the fuel has already started prior to the start time of the inspection target period (prior to the timing T9), and the combustion of the fuel continues after the finish time of the inspection target period (after the timing T8). Thus, in this case, the maximum value of the amount of heat generated per volume unit of the fuel in the inspection target period (reference heat production efficiency) is set as a value that is lower than 30 $J/mm^3$. For example, the maximum value is set as 20 $J/mm^3$. This value is set by multiplying the reference heat production efficiency (30 $J/mm^3$) of the case where the entire period of the combustion period is set as the inspection target period, by a predetermined ratio. For example, this value is obtained by multiplying the heat production amount in the entire combustion period in which the ideal combustion is carried out, by a ratio of the amount of heat generated in the inspection target period. Also, this value may be obtained based on an experiment, a simulation, or the like.

That is, when ideal combustion is carried out in the combustion chamber 3, the reference heat production efficiency in the inspection target period described above is obtained in advance, and the reference heat production efficiency and the actual heat production efficiency are compared. If the actual heat production efficiency is within the allowable range set in advance with respect to 20 $J/mm^3$ (for example, 15 $J/mm^3 \leq$ actual heat production efficiency $\leq$ 20 $J/mm^3$), it can be determined that the combustion is the ideal combustion. That is, the combustion state is evaluated based on the determination on whether the actual heat production efficiency is within the allowable range (whether the deviation amount from the reference heat production efficiency is within the allowable range).

The evaluation method and combustion improvement operation after evaluation according to this example are similar to those of the embodiment described above.

It is to be noted that the method of the determination on whether there is an occurrence of the deterioration in the combustion state where the start time and the finish time of the inspection target period are set to the predetermined crank angle positions respectively can be applied not only to the combustion of the main injection, but also to the combustion of the pilot injection.

-Modification of Reference Value and Actual Value-

In the present embodiment and each modification described above, the maximum value of the amount of heat generated per volume unit of fuel in the inspection target period is set as the reference heat production efficiency, which serves as a reference value to evaluate the combustion state. Also, the amount of heat generated per volume unit of actual fuel in the inspection target period is set as the actual heat production efficiency, which serves as an actual value to evaluate the combustion state.

Instead, in this modification, "reference heat production amount" obtained by multiplying the reference heat production efficiency by a fuel injection amount instructed by the fuel injection amount instruction value is defined as a reference value to evaluate the combustion state, and the reference heat production amount and the amount of heat (actual amount of heat generated) that is actually generated in the inspection target period are compared to evaluate the combustion state.

In this example, the reference heat production amount is calculated based on the reference heat production efficiency and is quantitatively obtained in accordance with the fuel injection amount, even if the engine types vary. Accordingly, it is not necessary to individually define the evaluation reference of the combustion state for each engine type and each fuel injection amount, and it is possible to establish the comprehensive evaluation reference of the combustion state common to various engine types and various fuel injection amounts.

-Other Embodiment-

The embodiment and each modification above describe a case where the present invention is applied to the inline four-cylinder diesel engine mounted in an automobile. The present invention can be applied not only to engines in the automobile but also to engines that are used for other purposes. Also, the number of cylinder and types of engines (inline-type engines, V-type engines, horizontally opposed engines, and the like) are not limited in particular.

Also, in the embodiment and the first to the fourth modifications described above, the start time of the inspection target period is defined as the start time of combustion period. The present invention is not limited to this, but may be such that the start time of fuel injection is defined as the start time of the inspection target period. For example, the timing T0 in FIG. 5 may be defined as the start time of the inspection target period.

Also, while the embodiment and the modifications describe the engine 1 employing the piezo injector 23 that turns into a full-open valve state only during an energized period to change the fuel injection rate, the present invention can also be applied to engines employing variable injection rate injectors.

In addition, while the embodiment and the modifications describe the maniveter 77 including the NSR catalyst 75 and the DPNR catalyst 76, the maniverter 77 may include the NSR catalyst 75 and a DPF (Diesel Particulate Filter).

Also, in the embodiment and the modifications described above, the occurrence of the deterioration in the combustion state is determined based on the amount of heat generated per volume unit of the fuel as a reference.

However, it is possible to determine the occurrence of the deterioration in the combustion state based on the amount of heat generated per mass unit of the fuel as a reference. That is, there is a correlation between volume and mass of fuel (mass = density × volume), and "the amount of heat generated per volume unit of the fuel (description in Claims)" is synonymous with "the amount of heat generated per mass unit of the fuel".

Industrial Applicability

The present invention can be applied to combustion control to achieve an appropriate adjustment of the amount of heat generated in a combustion chamber for a common rail in-cylinder direct injection multi-cylinder diesel engine mounted in an automobile.

Description of the Reference Numeral

1       Engine (Internal combustion engine)
23      Injector (Fuel injection valve)
3       Combustion chamber
4B      In-cylinder pressure sensor
5       Turbocharger
8       Exhaust gas recirculation path
81      EGR valve
100     ECU

Claims

1.  A control apparatus (100) of a compression self-igniting internal combustion engine (1) that is configured to carry out combustion by self-ignition of fuel injected from a fuel injection valve (23) into a combustion chamber (3) in accordance with a fuel injection amount instruction value,

    wherein
    the control apparatus (100) comprises a combustion deterioration determining means configured to compare a reference heat production efficiency that is a constant value and a maximum value of an amount of heat generated per volume unit of fuel in a predetermined inspection target period including at least part of combustion period of the fuel injected with an actual heat production efficiency that is a value obtained by dividing an amount of heat actually generated in the inspection target period by a fuel injection amount instructed by the fuel injection amount instruction value, and configured to determine whether there is an occurrence of combustion deterioration in the combustion chamber based on a deviation amount of the actual heat production efficiency with respect to the reference heat production efficiency,
    **characterized in that**
    the control apparatus (100) further comprising a correction means configured to carry out correction for a fuel injection mode, when the deviation amount of the actual heat production efficiency with respect to the reference heat production efficiency exceeds a predetermined threshold value, and the combustion deterioration determining means determines that the combustion state in the combustion chamber is deteriorated, wherein
    the correction means is configured to carry out increase correction for the fuel injection amount when the actual heat production efficiency is lower than the reference heat production efficiency, the deviation amount exceeds a predetermined threshold value, and the combustion deterioration determining means determines that the combustion state in the combustion chamber is deteriorated,
    wherein
    the correction means is configured to carry out decrease correction for the fuel injection amount and carry out increase correction for an amount of oxygen introduced to the combustion chamber when the deterioration of the combustion state is not improved by the increase correction for the fuel injection amount.

2.  The control apparatus (100) of the internal combustion engine (1) according to claim 1,
    wherein the inspection target period is set as an entire period of the combustion period, and
    wherein whereas the reference heat production efficiency is a constant value and a maximum value of the amount of heat generated per volume unit of fuel in the entire period of the combustion period, the actual heat production efficiency is a value obtained by dividing an amount of heat actually generated in the entire period of the combustion period by the fuel injection amount instructed by the fuel injection amount instruction value.

3. The control apparatus (100) of the internal combustion engine (1) according to claim 1,
   wherein the inspection target period is set as a period that is part of the combustion period, and
   wherein whereas the reference heat production efficiency is a constant value defined as a value obtained by multiplying a maximum value of the amount of heat generated per volume unit of fuel in the entire period of the combustion period by a predetermined ratio, the actual heat production efficiency is a value obtained by dividing the amount of heat actually generated in the inspection target period by the fuel injection amount instructed by the fuel injection amount instruction value.

4. The control apparatus (100) of the internal combustion engine (1) according to claim 1, 2 or 3, wherein the correction means is configured to carry out decrease correction for the fuel injection amount when the actual heat production efficiency is higher than the reference heat production efficiency.

5. The control apparatus (100) of the internal combustion engine (1) according to any one of claims 1 to 4,
   wherein, when at least main injection and auxiliary injection to be executed prior to the main injection are executed, as a fuel injection from the fuel injection valve into the combustion chamber, the inspection target period is set as a period from a combustion start time of fuel injected in the auxiliary injection to a combustion finish time of fuel injected in the main injection, or a period that is part of the period.

6. The control apparatus (100) of the internal combustion engine (1) according to any one of claims 1 to 4,
   wherein, when at least main injection and auxiliary injection to be executed prior to the main injection are executed, as a fuel injection from the fuel injection valve into the combustion chamber, in a case where there is produced an amount of heat generated by combustion of fuel injected in the main injection after an amount of heat generated by combustion of fuel injected in the auxiliary injection reduces to "0", the inspection target period is set as a period from a combustion start time of the fuel injected in the auxiliary injection to a time when the amount of heat generated by the combustion of the fuel injected in the auxiliary injection reduces to "0", or a period that is part of the period.

7. The control apparatus (100) of the internal combustion engine (1) according to any one of claims 1 to 4,
   wherein, when at least main injection and auxiliary injection to be executed prior to the main injection are executed, as a fuel injection from the fuel injection valve into the combustion chamber, in a case where there is produced an amount of heat generated by combustion of fuel injected in the main injection after an amount of heat generated by combustion of fuel injected in the auxiliary injection reduces to "0", the inspection target period is set as a period from a combustion start time of the fuel injected in the main injection to a time when the amount of heat generated by the combustion of the fuel injected in the main injection reduces to "0", or a period that is part of the period.

**Patentansprüche**

1. Steuervorrichtung (100) einer selbstzündenden Verdichtungsbrennkraftmaschine (1), die konfiguriert ist, eine Verbrennung durch Selbstzündung eines aus einem Kraftstoffeinspritzventil (23) in eine Brennkammer (3) gemäß einem Kraftstoffeinspritzmengenanweisungswert eingespritzten Kraftstoffs auszuführen,
   wobei
   die Steuervorrichtung (100) ein Verbrennungsverschlechterungsbestimmungsmittel umfasst, das konfiguriert ist, eine Bezugswärmeerzeugungsleistungsfähigkeit, die ein konstanter Wert ist, und ein maximaler Wert einer pro Volumeneinheit des Kraftstoffs erzeugten Wärmemenge in einem vorbestimmten Überprüfungssollzeitraum mit zumindest einem Teil des Verbrennungszeitraums des eingespritzten Kraftstoffs, mit einer tatsächlichen Wärmeerzeugungsleitungsfähigkeit, die ein Wert ist, der durch Dividieren einer Wärmemenge, die tatsächlich in dem Überwachungssollzeitraum durch eine durch den Kraftstoffeinspritzmengenanweisungswert angewiesene Kraftstoffeinspritzmenge erzeugt wird, zu vergleichen, und konfiguriert ist,
   ausgehend von einer Abweichungsgröße der tatsächlichen Wärmeerzeugungsleistungsfähigkeit mit Bezug auf die Bezugswärmeerzeugungsleistungsfähigkeit zu bestimmen, ob ein Auftreten einer Verbrennungsverschlechterung in der Brennkammer auftritt,
   **dadurch gekennzeichnet, dass**
   die Steuervorrichtung (100) außerdem ein Korrekturmittel umfasst, das konfiguriert ist, eine Korrektur für eine Kraftstoffeinspritzbetriebsart auszuführen, wenn die Abweichungsgröße der tatsächlichen Wärmeerzeugungsleistungsfähigkeit mit Bezug auf die Bezugswärmeerzeugungsleistungsfähigkeit einen vorbestimmten Schwellwert überschreitet, und das Verbrennungsverschlechterungsbestimmungsmittel bestimmt, dass der Verbrennungszustand in der Brennkammer verschlechtert ist, wobei das Korrekturmittel konfiguriert ist, eine Anstiegskorrektur für die Kraftstoffeinspritzmenge auszuführen, wenn die tatsächliche Wärmeerzeugungsleistungsfähigkeit niedriger als die Bezugswärmeerzeugungsleistungsfähigkeit ist, die Abweichungsgröße einen vorbestimmten Schwellenwert überschreitet, und das Verbrennungsverschlechterungsbestimmungsmittel bestimmt, dass der Verbrennungszustand in der Brennkammer verschlechtert ist,

wobei

das Korrekturmittel konfiguriert ist, eine Verlängerungskorrektur für die Kraftstoffeinspritzmenge auszuführen und eine Anstiegskorrektur für eine in die Brennkammer eingebrachte Sauerstoffmenge auszuführen, wenn die Verschlechterung des Verbrennungszustands nicht durch die Anstiegskorrektur für die Kraftstoffeinspritzmenge verbessert wird.

2.  Steuervorrichtung (100) der Brennkraftmaschine (1) nach Anspruch 1,
    wobei der Überwachungssollzeitraum als ein gesamter Zeitraum des Verbrennungszeitraums eingestellt ist, und
    wobei, während die Bezugswärmeerzeugungsleistungsfähigkeit ein konstanter Wert ist und ein maximaler Wert der pro Volumeneinheit des Kraftstoffs in dem gesamten Zeitraum des Verbrennungszeitraums erzeugten Wärmemenge ist, die tatsächliche Wärmeerzeugungsleistungsfähigkeit ein durch Dividieren einer in dem gesamten Zeitraum des Verbrennungszeitraums erzeugten Wärmemenge durch die durch den Kraftstoffeinspritzmengenanweisungswert angewiesene Kraftstoffeinspritzmenge erhaltener Wert ist.

3.  Steuervorrichtung (100) der Brennkraftmaschine (1) nach Anspruch 1,
    wobei der Einspritzsollzeitraum als ein Zeitraum eingestellt ist, der ein Teil des Verbrennungszeitraums ist, und
    wobei, während die Bezugswärmeerzeugungsleistungsfähigkeit ein konstanter Wert ist, der als ein Wert definiert ist, der durch Multiplizieren eines maximalen Werts der pro Volumeneinheit des Kraftstoffs in dem gesamten Zeitraum des Verbrennungszeitraums erzeugten Wärmemenge mit einem vorbestimmten Verhältnis erhalten wird, definiert ist, die tatsächliche Wärmeerzeugungsleistungsfähigkeit ein Wert ist, der durch Dividieren der Menge der tatsächlich in dem Überwachungseinspritzzeitraum erzeugten Wärmemenge durch die durch den Kraftstoffeinspritzmengenanweisungswert angewiesene Kraftstoffeinspritzmenge erhalten wird.

4.  Steuervorrichtung (100) der Brennkraftmaschine (1) nach Anspruch 1, 2 oder 3, wobei das Korrekturmittel konfiguriert ist, die Verringerungskorrektur für die Kraftstoffeinspritzmenge auszuführen, wenn die tatsächliche Wärmeerzeugungsleistungsfähigkeit höher als die Bezugswärmeerzeugungsleistungsfähigkeit ist.

5.  Steuervorrichtung (100) der Brennkraftmaschine (1) nach einem der Ansprüche 1 bis 4,
    wobei, wenn zumindest eine Haupteinspritzung und eine vor der Haupteinspritzung auszuführende Nebeneinspritzung aus einer Kraftstoffeinspritzung von dem Kraftstoffeinspritzventil in die Brennkammer ausgeführt werden, der Überwachungssollzeitraum als ein Zeitraum von einer Beginnzeit der Verbrennung des in der Hilfseinspritzung eingespritzten Kraftstoffs zu einer Endzeit der Verbrennung des in der Haupteinspritzung eingespritzten Kraftstoffs ist, oder ein Zeitraum ist, der ein Teil des Zeitraums ist.

6.  Steuervorrichtung (100) der Brennkraftmaschine (1) nach einem der Ansprüche 1 bis 4,
    wobei, wenn zumindest eine Haupteinspritzung und eine vor der Haupteinspritzung auszuführende Nebeneinspritzung als Kraftstoffeinspritzung von dem Kraftstoffeinspritzventil in die Brennkammer ausgeführt werden, in einem Fall, in dem eine durch die Verbrennung des in der Haupteinspritzung eingespritzten Kraftstoffs erzeugte Wärmemenge nach einer durch die Verbrennung des in der Hilfseinspritzung eingespritzten Kraftstoffs erzeugten Wärmemenge auf "0" reduziert ist, der Überwachungssollzeitraum als ein Zeitraum von einer Beginnzeit der Verbrennung des in der Hilfseinspritzung eingespritzten Kraftstoffs zu einer Zeit eingestellt ist, zu der die durch die in der Hilfseinspritzung eingespritzte Verbrennung des Kraftstoffs auf "0" reduziert ist, oder als ein Zeitraum, der ein Teil des Zeitraums ist.

7.  Steuervorrichtung (100) der Brennkraftmaschine (1) nach einem der Ansprüche 1 bis 4,
    wobei, wenn zumindest eine Haupteinspritzung und eine vor der Haupteinspritzung auszuführende Nebeneinspritzung als eine Kraftstoffeinspritzung von dem Kraftstoffeinspritzventil in die Brennkammer ausgeführt werden, in einem Fall, in dem eine durch die Verbrennung des in der Haupteinspritzung eingespritzten Kraftstoffs erzeugten Wärmemenge nach einer durch eine Verbrennung des in der Hilfseinspritzung eingespritzten Kraftstoffs erzeugte Wärmemenge auf "0" reduziert ist, der Einspritzsollzeitraum als ein Zeitraum vor einer Beginnzeit der Verbrennung des in der Haupteinspritzung eingespritzten Kraftstoffs zu einer Zeit eingestellt ist, zu der die durch die Verbrennung des in der Haupteinspritzung eingespritzten Kraftstoffs erzeugte Wärmemenge auf "0" reduziert ist, oder als ein Zeitraum, der ein Teil des Zeitraums ist.

## Revendications

**1.** Appareil de commande (100) d'un moteur à combustion interne à auto-allumage par compression (1) qui est configuré pour réaliser la combustion en allumant automatiquement le carburant injecté par une soupape d'injection de carburant (23) dans une chambre de combustion (3) selon une soupape d'instruction de quantité d'injection de carburant, dans lequel :

l'appareil de commande (100) comprend un moyen de détermination de détérioration de combustion configuré pour comparer une efficacité de production de chaleur de référence qui est une valeur constante et une valeur maximum d'une quantité de chaleur générée par unité de volume de carburant dans une période cible d'inspection prédéterminée comprenant au moins une partie de période de combustion du carburant injecté, avec une véritable efficacité de production de chaleur qui est une valeur obtenue en divisant une quantité de chaleur véritablement générée dans la période cible d'inspection par une quantité d'injection de carburant indiquée par la valeur d'instruction de quantité d'injection de carburant, et configurée pour déterminer s'il y a une occurrence de détérioration de combustion dans la chambre de combustion sur la base d'une quantité de déviation de la véritable efficacité de production de chaleur par rapport à l'efficacité de production de chaleur de référence, **caractérisé en ce que** :
l'appareil de commande (100) comprenant en outre un moyen de correction configuré pour réaliser la correction d'un mode d'injection de carburant, lorsque la quantité de déviation de la véritable efficacité de production de chaleur par rapport à l'efficacité de production de chaleur de référence dépasse une valeur de seuil prédéterminée, et le moyen de détermination de détérioration de combustion détermine que l'état de combustion dans la chambre de combustion est détérioré, dans lequel :

le moyen de correction est configuré pour réaliser la correction d'augmentation pour la quantité d'injection de carburant lorsque la véritable efficacité de production de chaleur est inférieure à l'efficacité de production de chaleur de référence, la quantité de déviation dépasse une valeur de seuil prédéterminée, et le moyen de détermination de détérioration de combustion détermine que l'état de combustion dans la chambre de combustion est détérioré,
dans lequel :
le moyen de correction est configuré pour réaliser la correction de réduction pour la quantité d'injection de carburant et réaliser la correction d'augmentation pour une quantité d'oxygène introduite dans la chambre de combustion lorsque la détérioration de l'état de combustion n'est pas améliorée par la correction d'augmentation pour la quantité d'injection de carburant.

**2.** Appareil de commande (100) d'un moteur à combustion interne (1) selon la revendication 1,
dans lequel la période cible d'inspection est déterminée comme étant une période entière de la période de combustion, et
dans lequel alors que l'efficacité de la production de chaleur de référence est une valeur constante et une valeur maximum de la quantité de chaleur générée par unité de volume de carburant dans toute la période de la période de combustion, la véritable efficacité de production de chaleur est une valeur obtenue en divisant une quantité de chaleur véritablement générée dans toute la période de la période de combustion par la quantité d'injection de carburant indiquée par la valeur d'instruction de quantité d'injection de carburant.

**3.** Appareil de commande (100) d'un moteur à combustion interne (1) selon la revendication 1,
dans lequel la période cible d'inspection est déterminée comme étant une période qui fait partie de la période de combustion, et
dans lequel, alors que l'efficacité de production de chaleur de référence est une valeur constante définie comme une valeur obtenue en multipliant une valeur maximum de la quantité de chaleur générée par unité de volume de carburant dans toute la période de la période de combustion par un rapport prédéterminé, la véritable efficacité de production de chaleur est une valeur obtenue en divisant la quantité de chaleur véritablement générée dans la période cible d'inspection par la quantité d'injection de carburant indiquée par la valeur d'instruction de quantité d'injection de carburant.

**4.** Appareil de commande (100) d'un moteur à combustion interne (1) selon la revendication 1, 2 ou 3, dans lequel le moyen de correction est configuré pour réaliser la correction de réduction pour la quantité d'injection de carburant lorsque la véritable production de chaleur est supérieure à l'efficacité de production de chaleur de référence.

5. Appareil de commande (100) d'un moteur à combustion interne (1) selon l'une quelconque des revendications 1 à 4, dans lequel, lorsque au moins une injection principale et une injection auxiliaire à exécuter avant l'injection principale sont exécutées, en tant qu'injection de carburant à partir de la soupape d'injection de carburant dans la chambre de combustion, la période cible d'inspection est déterminée comme étant une période allant d'un temps de début de combustion de carburant injecté dans l'injection auxiliaire jusqu'à un moment d'achèvement de combustion de carburant injecté dans l'injection principale, ou une période qui fait partie de la période.

6. Appareil de commande (100) d'un moteur à combustion interne (1) selon l'une quelconque des revendications 1 à 4, dans lequel, lorsqu'au moins une injection principale et une injection auxiliaire à exécuter avant l'injection principale sont exécutées, en tant qu'injection de carburant à partir de la soupape d'injection de carburant dans la chambre de combustion, dans un cas dans lequel on produit une quantité de chaleur générée par la combustion de carburant injecté dans l'injection principale après qu'une quantité de chaleur générée par la combustion de carburant injecté dans l'injection auxiliaire a été réduite à « 0 », la période cible d'inspection est déterminée comme étant une période allant d'un temps de début de combustion du carburant injecté dans l'injection auxiliaire jusqu'à un moment où la quantité de chaleur générée par la combustion du carburant injecté dans l'injection auxiliaire est réduite à « 0 », ou une période qui fait partie de la période.

7. Appareil de commande (100) d'un moteur à combustion interne (1) selon l'une quelconque des revendications 1 à 4, dans lequel, lorsqu'au moins l'injection principale et l'injection auxiliaire à exécuter avant l'injection principale sont exécutées, en tant qu'injection de carburant à partir de la soupape d'injection de carburant dans la chambre de combustion, dans un cas dans lequel on produit une quantité de chaleur générée par la combustion de carburant injecté dans l'injection principale après qu'une quantité de chaleur générée par combustion de carburant injecté dans l'injection auxiliaire a été réduite à « 0 », la période cible d'inspection est déterminée comme étant une période à partir d'un moment de début de combustion du carburant injecté dans l'injection principale jusqu'à un moment où la quantité de chaleur générée par la combustion du carburant injecté dans l'injection principale est réduite à « 0 » ou une période qui fait partie de la période.

FIG.1

FIG.2

FIG.3

100 : ECU

105

| 40 | CRANK POSITION SENSOR |
| 41 | RAIL PRESSURE SENSOR |
| 42 | THROTTLE OPENING DEGREE SENSOR |
| 43 | AIRFLOW METER |
| 44 | A/F SENSOR |
| 45 | EXHAUST TEMPERATURE SENSOR |
| 46 | WATER TEMPERATURE SENSOR |
| 47 | ACCELERATOR OPENING DEGREE SENSOR |
| 48 | INTAKE PRESSURE SENSOR |
| 49 | INTAKE TEMPERATURE SENSOR |
| 4A | OUTSIDE AIR PRESSURE SENSOR |
| 4B | IN-CYLINDER PRESSURE SENSOR |

INPUT INTERFACE

BACKUP RAM — 104

RAM — 103

ROM — 102

CPU — 101

| 21 | SUPPLY PUMP |
| 23 | INJECTOR |
| 26 | FUEL ADDITION VALVE |
| 62 | THROTTLE VALVE |
| 66 | SWIRL CONTROL VALVE |
| 81 | EGR VALVE |

OUTPUT INTERFACE

107

106

# FIG.4

# FIG.5

HEAT PRODUCTION RATE

COMBUSTION CENTER OF GRAVITY

T1

INSPECTION TARGET PERIOD

T2

CRANK ANGLE

FUEL INJECTION RATE

T0

CRANK ANGLE

FIG.6A

FIG.6B

31

## FIG.7A

## FIG.7B

## FIG.8A

HEAT PRODUCTION RATE

0

TDC

CRANK ANGLE

FUEL INJECTION RATE

TDC

CRANK ANGLE

## FIG.8B

(J/mm³)

HEAT PRODUCTION EFFICIENCY

30

DELAY ANGLE

SECOND PILOT INJECTION TIME

## FIG.9A

## FIG.9B

## FIG.10

```
      ┌─────────────────────────────┐
      │  IMPROVEMENT OPERATEN OF    │
      │     COMBUSTION STATE        │
      └─────────────────────────────┘
                    │
                    ▼                        ST1
   ┌──YES──┐  ╱─────────────────────────╲
   │   1   │◄─│   IS ACTUAL HEAT         │
   └───────┘  │  PRODUCTION EFFICIENCY   │
              ╲ WITHIN ALLOWABLE RANGE ? ╱
                    │ NO        ST2
                    ▼
              ╱─────────────────────╲  NO
              │   ACTUAL HEAT        │──────────┐
              │ PRODUCTION EFFICIENCY│          │
              ╲  < ALLOWABLE RANGE ? ╱          │
                    │ YES    ST3                │
                    ▼                           ▼         ST9
   ┌─────────────────────────────┐  ┌─────────────────────────────┐
   │ CALCULATE INCREASE          │  │ CALCULATE DECREASE          │
   │ CORRECTION AMOUNT OF FUEL   │  │ CORRECTION AMOUNT OF FUEL   │
   └─────────────────────────────┘  └─────────────────────────────┘
                    │ ST4                       │         ST10
                    ▼                           ▼
   ┌─────────────────────────────┐  ┌─────────────────────────────┐
   │ EXECUTE INCREASE            │  │ EXECUTE DECREASE            │
   │ CORRECTION OF FUEL          │  │ CORRECTION OF FUEL          │
   └─────────────────────────────┘  └─────────────────────────────┘
                    │ ST5                       │         ST11
                    ▼                           ▼
   ┌──NO──┐  ╱─────────────────╲   ╱───────────────────────────╲  YES
   │  1   │◄─│  ACTUAL HEAT    │   │  ACTUAL HEAT               │────┐
   └──────┘  │PRODUCTION EFFIC.│   │ PRODUCTION EFFICIENCY >    │    │
             ╲< ALLOWABLE RANGE?╱  │ REFERENCE HEAT            │    │
                    │ YES          ╲ PRODUCTION EFFICIENCY     ╱    │
                    ▼                        │ NO                   │
                                             │                ST12  │
   ┌─────────────────────────────┐           │                      ▼
   │ EXECUTE DECREASE CORRECTION │           │           ┌──────────────────┐
   │ OF FUEL                     │ ST6       │           │  LIGHT UP MIL     │
   │ EXECUTE INCREASE CORRECTION │           │           └──────────────────┘
   │ OF OXYGEN INTRODUCED AMOUNT │           │                      │
   └─────────────────────────────┘           │                      │
                    │ ST7                     │                      │
                    ▼                         │                      │
   ┌──YES  ╱─────────────────────╲            │                      │
   │ ST8   │   ACTUAL HEAT        │◄───────────┘                      │
   │       │ PRODUCTION EFFICIENCY│                                   │
   │       ╲  < ALLOWABLE RANGE ? ╱                                   │
   │              │ NO                                                │
   ▼              │                                                   │
 ┌──────────┐     │                                                   │
 │LIGHT UP  │     │                                                   │
 │  MIL     │     │                                                   │
 └──────────┘     │                                                   │
      │           │                                                   │
      └───────────┤◄──────────────────────────────────────────────────┘
 ┌──┐             │
 │1 │─────────────┤
 └──┘             ▼
           ┌──────────────┐
           │   RETURN     │
           └──────────────┘
```

# FIG.11

HEAT PRODUCTION RATE

T1 | INSPECTION TARGET PERIOD | ATDC25° | CRANK ANGLE

FUEL INJECTION RATE

CRANK ANGLE

FIG.12

# FIG.13

HEAT PRODUCTION RATE

T5

INSPECTION TARGET PERIOD FOR PILOT INJECTION

T6

INSPECTION TARGET PERIOD FOR MAIN INJECTION

T7

CRANK ANGLE

FUEL INJECTION RATE

PILOT INJECTION

MAIN INJECTION

CRANK ANGLE

FIG.14

# FIG.15

FIG.16

## REFERENCES CITED IN THE DESCRIPTION

### Patent documents cited in the description

- JP 2006183466 A
- JP H11173201 A
- US 2009012673 A1
- US 2009292447 A1